# EUROPEAN PATENT APPLICATION

(11) **EP 4 398 477 A1**
(43) Date of publication of application: **10.07.2024**
(21) Application number: 22864263.3
(22) Date of filing: 17.08.2022
(51) Int. Cl.: H02P 5/46, B60L 9/18, B60L 15/20, B60L 50/60

(54) **CONTROL APPARATUS FOR DYNAMO-ELECTRIC MACHINE, AND PROGRAM**

(30) Priority: 02.09.2021 JP 2021143101; 03.08.2022 JP 2022124324
(71) Applicant: DENSO CORPORATION, Kariya-city, Aichi 448-8661 (JP)
(72) Inventor: NAKASHIMA, Yoshihiro, Kariya-city, Aichi 448-8661 (JP); AOKI, Yasuaki, Kariya-city, Aichi 448-8661 (JP)
(74) Representative: TBK
(86) International application number: PCT/JP2022/031097
(87) International publication number: WO 2023/032678

(57) **Abstract**

A control apparatus of a rotating electric machine is applicable to a control system that includes: a plurality of power conversion circuits (22a, 22b) that convert direct-current power from a direct-current power supply (30) to alternating-current power and output the alternating-current power by switching operations; rotating electric machines (21a, 21b) that are provided in correspondence to the power conversion circuits and supplied with the alternating-current power outputted from the power conversion circuits; and a capacitor (23) that is connected in parallel to the direct-current power supply, provided on an input side of the power conversion circuits, and common to the power conversion circuits. The control apparatus of a rotating electric machine includes: an adjusting unit that performs an adjustment process in which output modes of voltage vectors to the rotating electric machines are adjusted and an operating unit that performs the switching operations of the power conversion circuits to output the voltage vectors adjusted by the adjusting unit.

## Description

### [Cross-Reference to Related Application]

The present application is based on and claims the benefit of priority from Japanese Patent Application No. 2021-143101, filed on September 2, 2021, and Japanese Patent Application No. 2022-124324, filed on August 3, 2022, the descriptions both of which are incorporated herein by reference.

### [Technical Field]

The present disclosure relates to a control apparatus of a rotating electric machine and a program.

### [Background Art]

As this type of control apparatus, there is a control apparatus that is applicable to a control system that includes a plurality of power conversion circuits, rotating electric machines provided in correspondence to the power conversion circuits, and a capacitor provided on an input side of the power conversion circuits and common to the power conversion circuits. Each power conversion circuit is supplied direct-current power from a direct-current power supply. The direct-current power supplied to each power conversion circuit is converted to alternating-current power by a switching operation. The converted alternating-current power is then supplied to the corresponding rotating electric machine. In this case, the capacitor is charged and discharged based on the switching operation of each power conversion circuit, and a ripple current flows to the capacitor. For example, PTL 1 describes that, to reduce the ripple current in the capacitor, in a control apparatus that performs switching operations based on comparison between a command voltage of each power conversion circuit and a carrier signal, control to shift the carrier signals of the power conversion circuits from one another is performed.

### [Citation List]

### [Patent Literature]

[PTL 1] JP 2012-120296 A

### [Summary]

Occurrence of a malfunction in a configuration that is commonly provided to a plurality of power conversion circuits is a concern. For example, in a case in which torques and rotation speeds of the rotating electric machines corresponding to the power conversion circuits differ, there is a likelihood that output periods of active voltage vectors to the rotating electric machines will not be adjusted to appropriate output periods for suppressing the ripple current in the capacitor. In this case, for example, even if the control described in PTL 1 is performed, increase in the ripple current flowing to the capacitor becomes a concern.

In this regard, to suppress the occurrence of malfunctions in the configuration that is commonly provided to a plurality of power conversion circuits, a control technique that enables voltage vectors to be appropriately outputted to the rotating electric machines is desired.

The present disclosure has been achieved in light of the above-described issues. A main object of the present disclosure is provide a control apparatus of a rotating electric machine and a program capable of suppressing occurrence of a situation in which a malfunction occurs in a configuration that is commonly provided to a plurality of power conversion circuits.

The present disclosure is applicable to a control system that includes a plurality of power conversion circuits that convert direct-current power from a direct-current power supply to alternating-current power and output the alternating-current power by switching operations; rotating electric machines that are provided in correspondence to the power conversion circuits and supplied with the alternating-current power outputted from the power conversion circuits; and a capacitor that is connected in parallel to the direct-current power supply, provided on an input side of the power conversion circuits, and common to the power conversion circuits, and includes: an adjusting unit that performs an adjustment process in which output modes of voltage vectors to the rotating electric machines are adjusted, and an operating unit that performs the switching operations of the power conversion circuits to output the voltage vectors adjusted by the adjusting unit.

As a result of the present disclosure, the output modes of the voltage vectors to the rotating electric machines are adjusted. As a result of switching operations of inverters being performed so that the adjusted voltage vectors are outputted, occurrence of a situation in which a malfunction occurs in a configuration that is commonly provided to a plurality of power conversion circuits can be suppressed.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a schematic diagram illustrating an electric vehicle according to a first embodiment;
Fig. 2 is a configuration diagram illustrating a control system;
Fig. 3 is a diagram illustrating a relationship between a torque of each rotating electric machine and a steering angle;
Fig. 4 is a diagram illustrating a relationship between a torque difference between the rotating electric machines and the steering angle;
Fig. 5 is a diagram illustrating a relationship between a rotation speed of each rotating electric machine and the steering angle;
Fig. 6 is a diagram illustrating a relationship between a rotation speed difference between the rotating electric machines and the steering angle;
Fig. 7 is a diagram illustrating the relationship between the torque of each rotating electric machine and the steering angle;
Fig. 8 is a diagram illustrating the relationship between the torque difference between the rotating electric machines and the steering angle;
Fig. 9 is a diagram of the relationship between the rotation speed of each rotating electric machine and the steering angle;
Fig. 10 is a diagram of the relationship between the rotation speed difference between the rotating electric machines and the steering angle;
Fig. 11 is a diagram illustrating correspondence between each voltage vector and upper and lower arm switches of each phase, and the like;
Fig. 12 is a diagram illustrating an example in which a command voltage vector is generated by a 60-degree voltage vector;
Fig. 13 is a diagram illustrating a current path when a first active voltage vector is applied during power running drive control;
Fig. 14 is a diagram illustrating a current path when a seventh reactive voltage vector is applied during power running drive control;
Fig. 15 is a diagram illustrating a current path when the first active voltage vector is applied during regenerative drive control;
Fig. 16 is a diagram illustrating a current path when the seventh reactive voltage vector is applied during regenerative drive control;
Fig. 17 is a diagram illustrating control in a comparative example in which a ripple current in a smoothing capacitor increases;
Fig. 18 is a diagram illustrating control in a comparative example in which the ripple current in the smoothing capacitor increases;
Fig. 19 is a diagram illustrating a 60-degree voltage vector, a 120-degree voltage vector, and a composite voltage vector;
Fig. 20 is a diagram illustrating an example of control in which output periods of active voltage vectors are adjusted;
Fig. 21 is a diagram illustrating an example of control in which the output periods of the active voltage vectors are adjusted;
Fig. 22 is a diagram illustrating a relationship between an inverter current and a ratio coefficient;
Fig. 23 is a diagram illustrating transitions in first and second inverter currents and a capacitor current;
Fig. 24 is a flowchart illustrating the steps in control performed by a control apparatus;
Fig. 25 is a flowchart illustrating the steps in control performed by a control apparatus according to a second embodiment;
Fig. 26 is a diagram illustrating an example of control in which an output period of each active voltage vector is adjusted according to a third embodiment;
Fig. 27 is a vector diagram illustrating a dq-axis coordinate system according to a fourth embodiment;
Fig. 28 is a vector diagram illustrating the dq-axis coordinate system;
Fig. 29 is a diagram illustrating an example of control in which the output periods of the active voltage vectors are adjusted;
Fig. 30 is a diagram illustrating an example of control for reducing a ripple current in a smoothing capacitor according to a fifth embodiment;
Fig. 31 is a configuration diagram illustrating a control system according to a sixth embodiment;
Fig. 32 is a diagram illustrating propagation characteristics;
Fig. 33 is a flowchart illustrating the steps in control performed by a control apparatus;
Fig. 34 is a flowchart illustrating the steps in a third adjustment process;
Fig. 35 is a timing chart illustrating an example of a frequency change process;
Fig. 36 is a timing chart illustrating an example of a frequency change process in a variation example according to the sixth embodiment;
Fig. 37 is a timing chart illustrating an example of the frequency change process; and
Fig. 38 is a flowchart illustrating the steps in a third adjustment process according to a seventh embodiment.

### [Description of Embodiments]

### <First embodiment>

A first embodiment actualizing a control apparatus of the present disclosure will hereinafter be described with reference to the drawings. According to the present embodiment, the control apparatus is mounted in an electric vehicle.

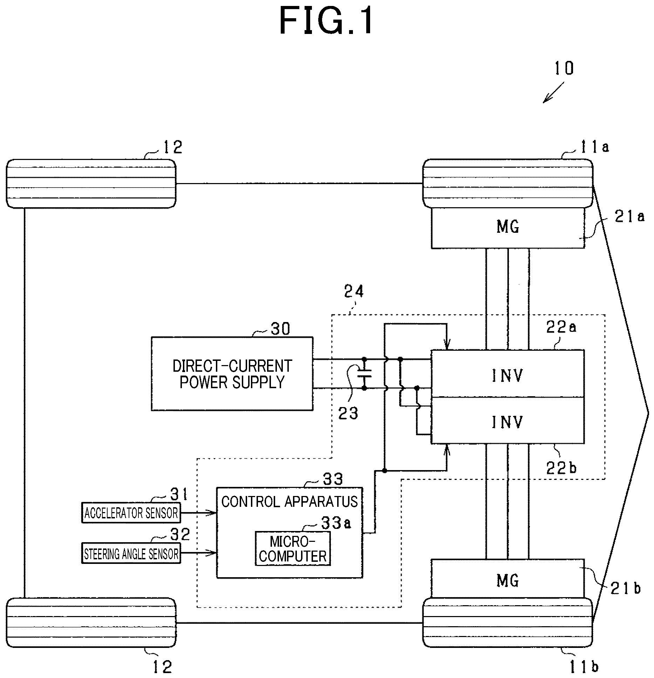

As shown in Fig. 1, a vehicle 10 includes a control system that includes left and right front wheels 11, left and right rear wheels 12, and a rotating electric machine 21. The rotating electric machine 21 is an in-wheel motor that is integrally provided on an inner peripheral side of the front wheel 11. According to the present embodiment, in relation to an advancing direction of the vehicle 10, a first rotating electric machine 21a is provided corresponding to the left front wheel 11a, and a second rotating electric machine 21b is provided corresponding to the right front wheel 11b. Therefore, each front wheel 11 is a drive wheel that can be rotatably driven independently of the other. Each rear wheel 12 is a non-driven wheel that follows in accompaniment with traveling of the vehicle 10.

The control system includes a first inverter 22a, a second inverter 22b, a smoothing capacitor 23, an inverter case 24, and a direct-current power supply 30. The first inverter 22a is provided corresponding to the first rotating electric machine 21a, and the second inverter 22b is provided corresponding to the second rotating electric machine 21b. The inverters 22a and 22b are power conversion circuits that convert direct-current power supplied from the direct-current power supply 30 to alternating-current power by switching operations, and supply the converted alternating-current power to the corresponding rotating electric machines 21a and 21b. A smoothing capacitor 23 common to the inverters 22a and 22b is provided on the direct-current power supply 30 side of the inverters 22a and 22b.

The control system includes an accelerator sensor 31, a steering angle sensor 32, and a control apparatus 33. The accelerator sensor 31 detects an accelerator stroke that is an amount of depression by a driver of an accelerator pedal that serves as an accelerator operating member. The steering angle sensor 32 detects a steering angle of a steering wheel by the driver. The left and right front wheels 11a and 11b serving as steered wheels are steered based on the steering angle. Detection values of the accelerator sensor 31 and the steering angle sensor 32 are inputted to the control apparatus 33. The first and second inverters 22a and 22b, the smoothing capacitor 23, and the control apparatus 33 are housed in an inverter case 24.

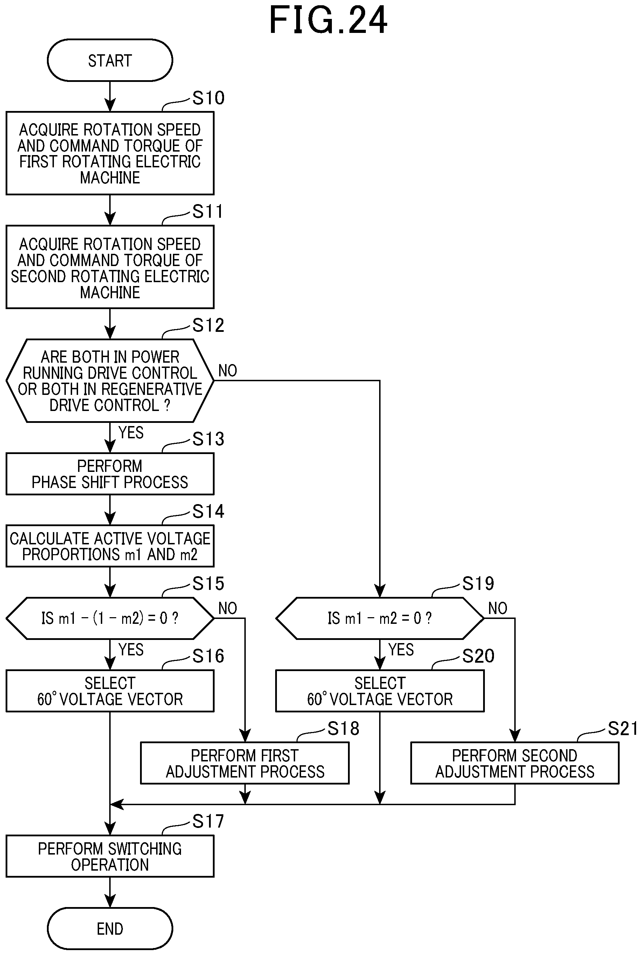

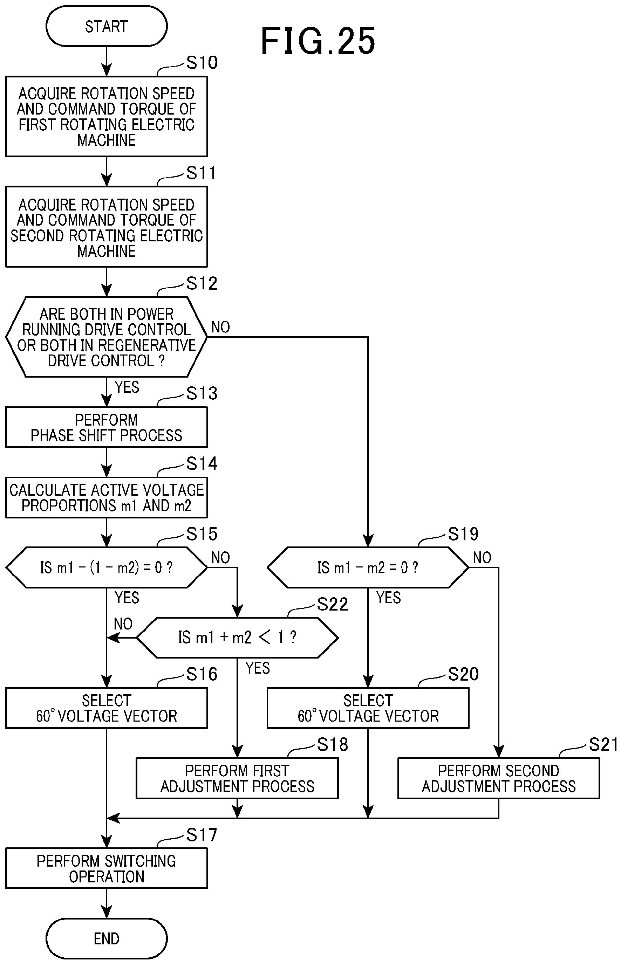

The control apparatus 33 is mainly configured by a microcomputer 33a (corresponding to a "computer"). The microcomputer 33a includes a central processing unit (CPU). Functions provided by the microcomputer 33a can be provided by software recorded in a tangible memory apparatus and a computer that runs the software, only software, only hardware, or a combination thereof. For example, when the microcomputer 33a is provided by an electronic circuit that is hardware, the microcomputer 33a can be provided by a digital circuit including numerous logic circuits or an analog circuit. For example, the microcomputer 33a runs a program stored in a non-transitory computer-readable (tangible) storage medium that serves as a storage unit included in the microcomputer 33a itself. The program includes, for example, a program for processes shown in Figs. 24 and 25, and the like. As a result of the program being run, a method corresponding to the program is performed. The storage unit is, for example, a nonvolatile memory. Here, for example, the program stored in the storage unit can be updated over a network such as the Internet.

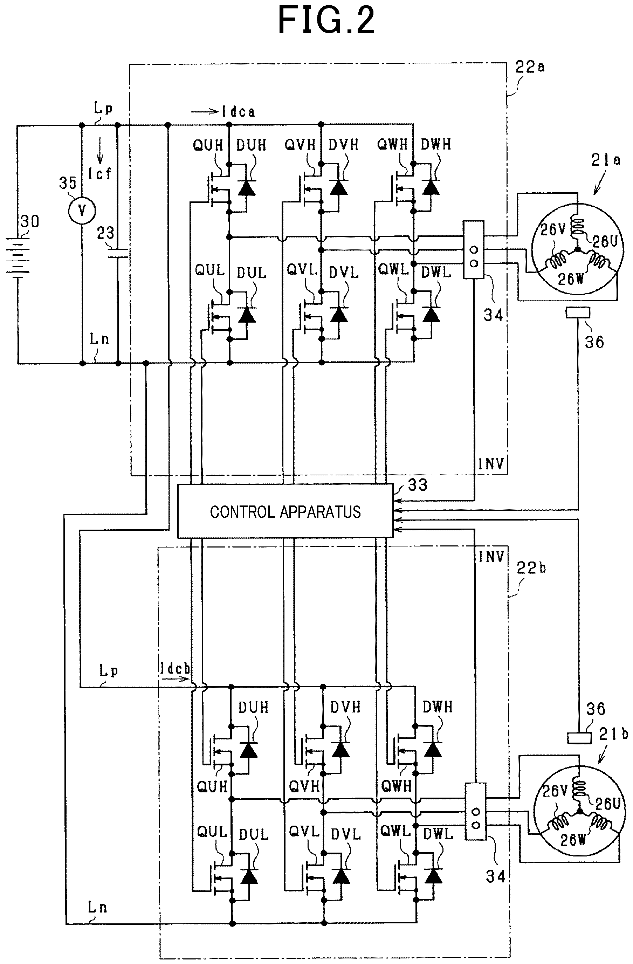

As shown in Fig. 2, the first rotating electric machine 21a is a three-phase synchronous motor and includes, as a stator winding, a U-phase winding 26U, a V-phase winding 26V, and a W-phase winding 26W that are connected by a star connection. The phase windings 26U, 26V, and 26W are arranged to be shifted by an electrical angle of 120 degrees each. For example, the first rotating electric machine 21a is a permanent-magnet synchronous motor.

The first inverter 22a includes a series connection body of upper arm switches QUH to QWH and lower arm switches QUL to QWL for three phases. A voltage-controlled semiconductor switching element is used as each of the switches QUH, QVH, QWH, QUL, QVL, and QWL. Specifically, an N-channel metal-oxide-semiconductor field-effect transistor (MOSFET) is used. Therefore, a high-potential-side terminal of each of the switches QUH, QVH, QWH, QUL, QVL, and QWL is a drain, and a low-potential-side terminal thereof is a source. The switches QUH, QVH, QWH, QUL, QVL, and QWL have body diodes DUH, DVH, DWH, DUL, DVL, and DWL.

A first end of the U-phase winding 26U is connected to the source of the U-phase upper arm switch QUH and the drain of the U-phase lower arm switch QUL by a conductive member such as a bus bar. A first end of the V-phase winding 26V is connected to the source of the V-phase upper arm switch QVH and the drain of the V-phase lower arm switch QVL by a conductive member such as a bus bar. A first end of the W-phase winding 26W is connected to the source of the W-phase upper arm switch QWH and the drain of the W-phase lower arm switch QWL by a conductive member such as a bus bar. Second ends of the phase windings 26U, 26V, 26W are connected at a neutral point O. Here, according to the present embodiment, the number of turns of each of the phase windings 26U, 26V, and 26W is set to be the same.

The drains of the upper arm switches QUH, QVH, and QWH and a positive electrode terminal of the direct-current power supply 30 are connected by a positive-electrode-side bus Lp such as a bus bar. The sources of the lower arm switches QUL, QVL, QWL and a negative electrode terminal of the direct-current power supply 30 are connected by a negative-electrode-side bus Ln such as a bus bar. The positive-electrode-side bus Lp and the negative-electrode-side bus Ln are connected by a smoothing capacitor 23.

The second rotating electric machine 21b is a three-phase synchronous motor and includes the phase windings 26U to 26W in a manner similar to the first rotating electric machine 21a. In a manner similar to the first inverter 22a, the second inverter 22b includes a series connection body of upper arm switches QUH to QWH and lower arm switches QUL to QWL for three phases. According to the present embodiment, the configurations of the rotating electric machines 21a and 21b, and the inverters 22a and 22b are basically the same. Therefore, detailed descriptions of the second rotating electric machine 21b and the second inverter 22b will be omitted.

For example, the direct-current power supply 30 is an assembled battery configured as a series connection body of battery cells serving as unit batteries and has a terminal voltage of, for example, several hundred V. According to the present embodiment, the terminal voltages (for example, rated voltages) of the battery cells configuring the direct-current power supply 30 are set to be the same. As the battery cell, for example, a secondary battery such as a lithium-ion battery can be used.

The control system includes a phase current sensor 34, a voltage sensor 35 and an angle sensor 36. The phase current sensor 34 individually detects currents flowing to the rotating electric machines 21a and 21b. The phase current sensor 34 detects at least two phase currents among the U, V, and W phase currents Iu, Iv, and Iw flowing to each of the rotating electric machines 21a and 21b. A sign of the phase currents Iu, Iv, Iw is positive when the current flows from a connection point of the series connection body of the upper and lower arm switches of each phase to each phase winding, and negative when the current flows from each phase winding to the connection point of the series connection body of the upper and lower arm switches of each phase. The voltage sensor 35 detects a terminal voltage of the smoothing capacitor 23. The angle sensor 36 is, for example, a resolver, and detects a rotation angle of a rotor of each of the rotating electric machine 21a and 21b. Detection values of the phase current sensor 34, the voltage sensor 35, and the angle sensor 36 are inputted to the control apparatus 33.

The control apparatus 33 performs power running drive control. Power running drive control is switching control of the inverters 22a and 22b for converting the direct-current power outputted from the direct-current power supply 30 to alternating-current power and supplying the converted alternating-current power to the rotating electric machines 21a and 21b. When this control is performed, the rotating electric machines 21a and 21b function as an electric motor and generate power running torque. In addition, the control apparatus 33 performs regenerative drive control. Regenerative drive control is switching control of the inverters 22a and 22b for converting alternating-current power generated by the rotating electric machines 21a and 21b to direct-current power and supplying the converted direct-current power to the direct-current power supply 30. When this control is performed, the rotating electric machines 21a and 21b function as a generator and generate regenerative braking torque.

The control apparatus 33 calculates a command rotation speed of the rotor of each of the rotating electric machines 21a and 21b based on the accelerator stroke detected by the accelerator sensor 31 and the steering angle detected by the steering angle sensor 32. The control apparatus 33 calculates a command torque as a manipulated variable for feedback-controlling the rotation speeds of the rotors of the rotating electric machines 21a and 21b to the calculated command rotation speed. The rotation speeds of the rotors of the rotating electric machines 21a and 21b may be calculated based on the detection value of the angle sensor 36.

When the calculated command torque is a positive value, power running drive control is performed. In addition, when the calculated command torque is a negative value, regenerative drive control is performed. The torques and rotation speeds of the left and right front wheels 11a and 11b that are the drive wheels are thereby controlled.

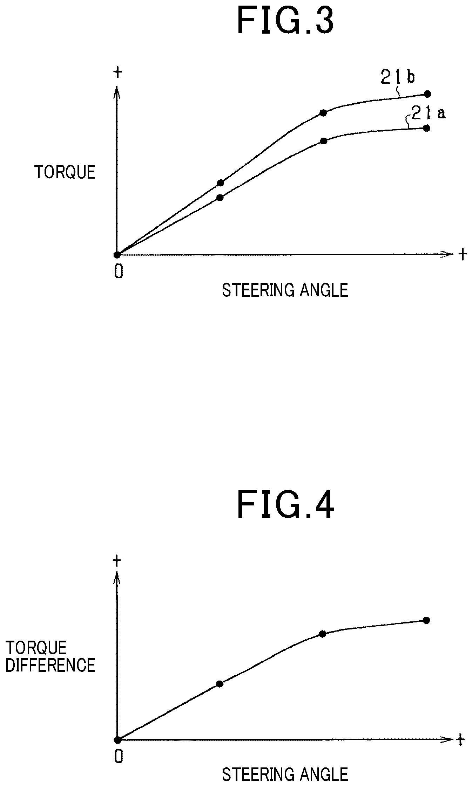

Here, in the vehicle 10, as the steering angle of the steering wheel becomes larger, a length of a trajectory drawn by the front wheel, of the left and right front wheels 11a and 11b, that is on the inner side during cornering is shorter than a length of a trajectory drawn by the front wheel on the outer side. Therefore, as the steering angle becomes larger, a torque difference and a rotation speed difference between the rotating electric machines 21a and 21b corresponding to the left and right front wheels 11a and 11b increase. Figs. 3 to 10 show examples of relationships between drive states of the rotating electric machines 21a and 21b during a left turn and the steering angle.

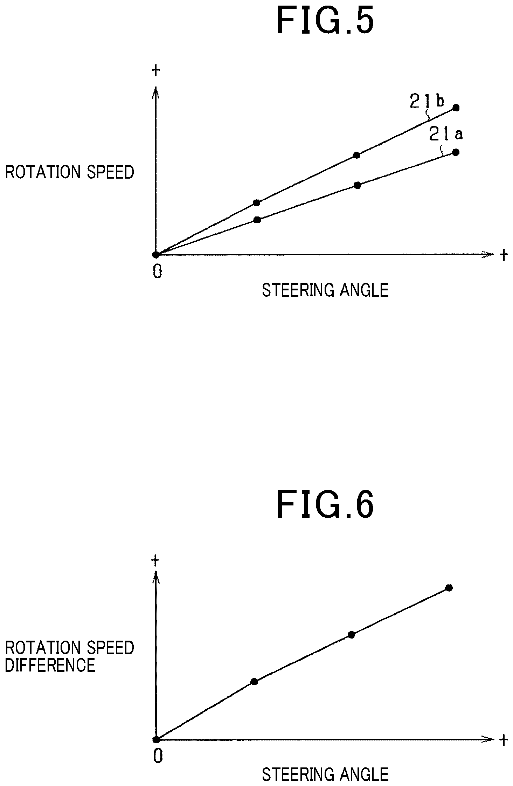

Figs. 3 to 6 are diagrams showing examples of relationships between the drive states of the rotating electric machines 21a and 21b and the steering angle when the vehicle 10 turns left from a stopped state. Fig. 3 shows a relationship between the torques of the rotating electric machines 21a and 21b and the steering angle. Fig. 4 shows a relationship between the torque difference between the rotating electric machines 21a and 21b and the steering angle. Fig. 5 shows a relationship between the rotation speeds of the rotating electric machines 21a and 21b and the steering angle. Fig. 6 shows a relationship between the rotation speed difference between the rotating electric machines 21a and 21b and the steering angle.

When the vehicle 10 turns left from a stopped state, power running drive control is performed in each of the rotating electric machines 21a and 21b corresponding to the left and right front wheels 11a and 11b. In this case, as the steering angle becomes larger, the torque and the rotation speed of the first rotating electric machine 21a corresponding to the left front wheel 11a become lower than the torque and the rotation speed of the second rotating electric machine 21b corresponding to the right front wheel 11b. Therefore, as the steering angle becomes larger, the torque difference and the rotation speed difference between the rotating electric machines 21a and 21b increase.

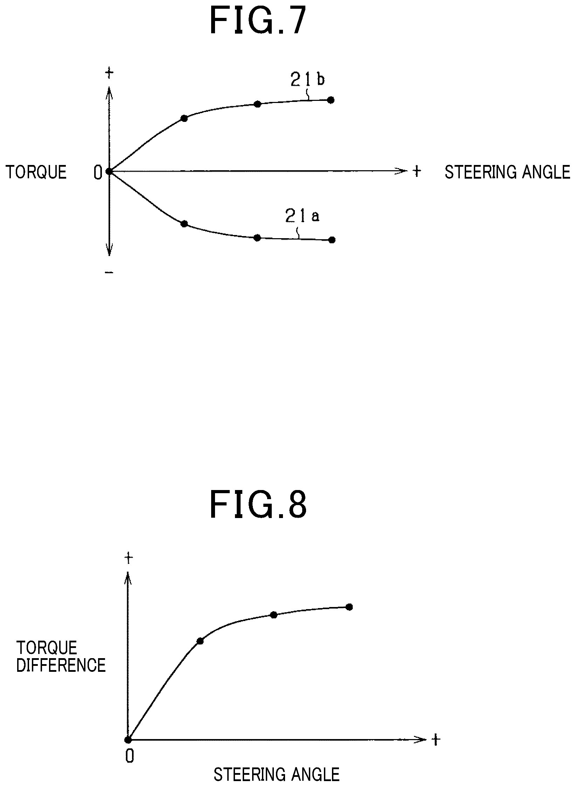

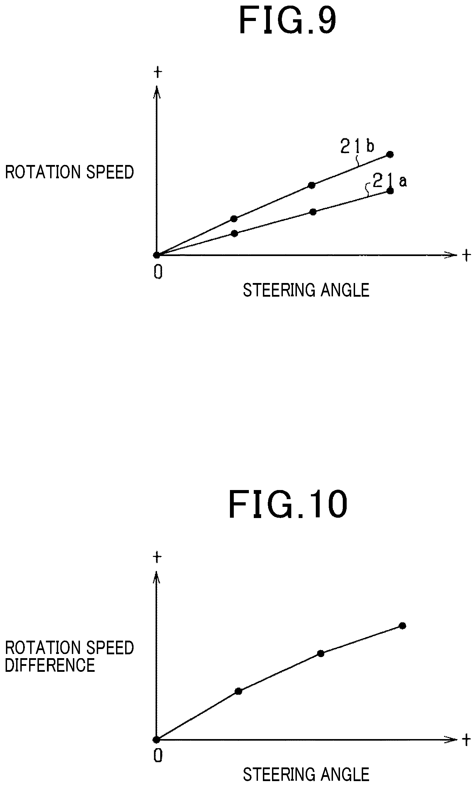

Figs. 7 to 10 are examples of the relationships between the drive states of the rotating electric machines 21a and 21b and the steering angle when the vehicle 10 turns left from a state of traveling straight ahead. Fig. 7 shows the relationship between the torques of the rotating electric machines 21a and 21b and the steering angle. Fig. 8 shows the relationship between the torque difference between the rotating electric machines 21a and 21b and the steering angle. Fig. 9 shows the relationship between the rotation speeds of the rotating electric machines 21a and 21b and the steering angle. Fig. 10 shows the relationship between the rotation speed difference between the rotating electric machines 21a and 21b and the steering angle.

When the vehicle 10 turns left from the state of traveling straight ahead, regenerative drive control is performed in the first rotating electric machine 21a corresponding to the left front wheel 11a that is the inner wheel, and power running drive control is performed in the second rotating electric machine 21a corresponding to the right front wheel 11b that is the outer wheel. In this case, as the steering angle becomes larger, the torque of the first rotating electric machine 21a increases to the negative side, and the torque of the second rotating electric machine 21b increases to the positive side. Therefore, as the steering angle becomes larger, the torque difference between the rotating electric machines 21a and 21b increases. Furthermore, as the steering angle becomes larger, the rotation speed of the first rotating electric machine 21a becomes lower than the rotation speed of the second rotating electric machine 21b. Therefore, as the steering angle becomes larger, the rotation speed difference between the rotating electric machines 21a and 21b increases.

The control apparatus 33 calculates a command voltage vector Vtr for controlling the torque of each of the rotating electric machines 21a and 21b to the calculated command torque. The command voltage vector Vtr is calculated for each of the rotating electric machines 21a and 21b. Switching operations of the inverters 22a and 22b are performed so that the voltage vector to each of the phase windings 26U to 26W of each of the rotating electric machines 21a and 21b becomes the command voltage vector Vtr. As a result, sinusoidal phase currents shifted from each other by 120 degrees flow in the rotating electric machines 21a and 21b.

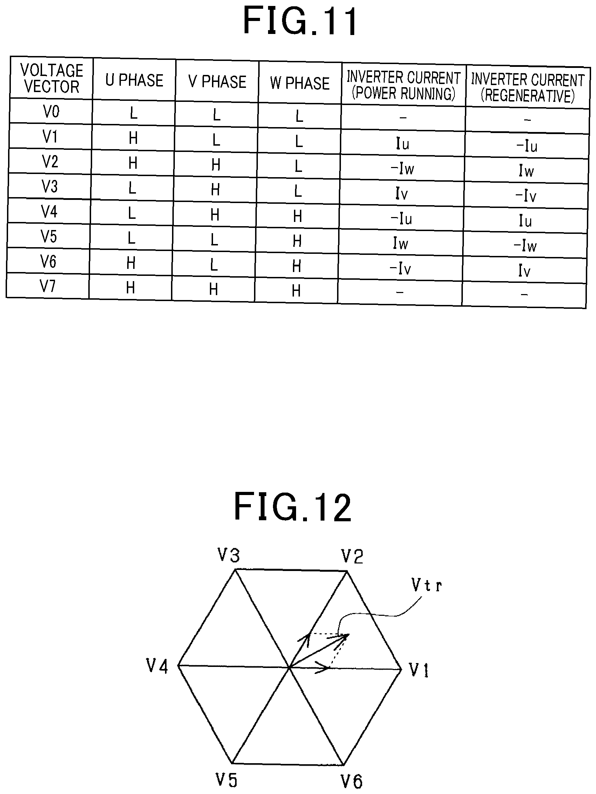

Fig. 11 shows drive modes of the upper and lower arm switches QUH to QWL of each phase corresponding to voltage vectors V0 to V7. In each phase, in the drive mode indicated by H, the upper arm switch is turned on and the lower arm switch is turned off. In addition, in the drive mode indicated by L, the upper arm switch is turned off and the lower arm switch is turned on.

In addition, Fig. 11 shows correspondence between an inverter current Idc and phase currents Iu, Iv, and Iw in each of voltage vectors V0 to V7. The inverter current Idc is a current flowing from a connection point of the positive-electrode-side bus Lp with a high-potential-side terminal of the smoothing capacitor 23 to the drain side of each of the upper arm switches QUH to QWH. When each of active voltage vectors V1 to V6 is applied, a phase current corresponding to each of the active voltage vectors V1 to V6 flows as the inverter current Idc. The inverter current Idc is in opposite directions in power running drive control and regenerative drive control.

When each of reactive voltage vectors V0 and V7 is applied, a closed circuit including each of the phase windings 26U, 26V, and 26W and the switch that is turned on is formed. Therefore, the inverter current Idc does not correspond to the phase currents Iu, Iv, and Iw.

Fig. 12 shows an example in which the command voltage vector Vtr is generated by a 60-degree voltage vector that is two types of active voltage vectors sandwiching the command voltage vector Vtr and having a phase difference of 60 degrees therebetween. In the example in Fig. 12, the first and second active voltage vectors V1 and V2 are used to generate the command voltage vector Vtr. In this case, a time ratio at which the first active voltage vector V1 and the second active voltage vector V2 appear in one switching cycle Tsw is calculated based on the terminal voltage of the smoothing capacitor 23 and each phase voltage. Here, as the terminal voltage of the smoothing capacitor 23, the detection value of the voltage sensor 35 may be used. In addition, each phase voltage is merely required to be calculated based on the detection value of the voltage sensor 35 and the drive mode of the upper and lower arm switches QUH to QWL of each phase. Here, in a period other than the period in which the first and second active voltage vectors V1 and V2 appear in one switching cycle Tsw, either of zeroth and seventh reactive voltage vectors V0 and V7 appears.

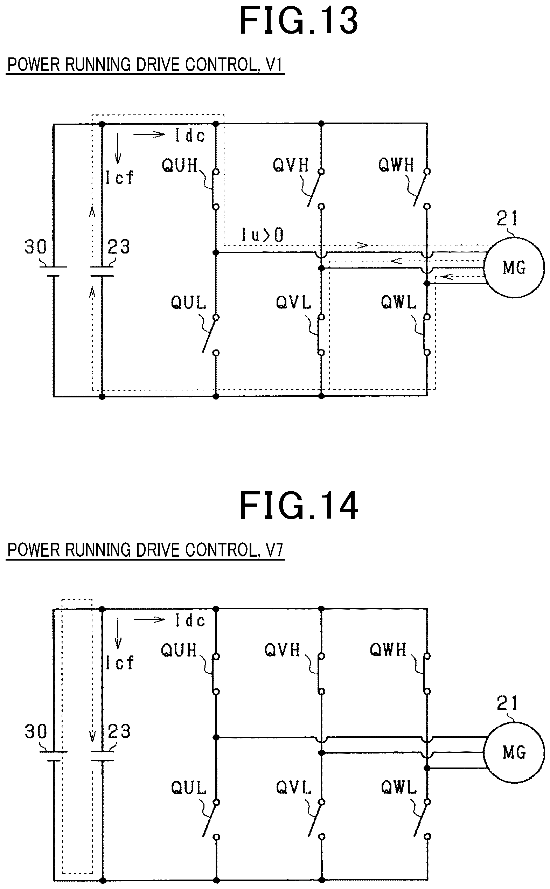

Figs. 13 to 16 show current paths of currents flowing to the rotating electric machines 21a and 21b, the inverters 22a and 22b, the smoothing capacitor 23, and the direct-current power supply 30. Here, in Figs. 13 to 16, the first and second rotating electric machines 21a and 21b are simply denoted as the rotating electric machine 21 for convenience.

Fig. 13 shows the current path in a case in which the first active voltage vector V1 is applied when power running drive control is performed. The current path is: the high-potential-side terminal of the smoothing capacitor 23 -> the U-phase upper arm switch QUH -> the rotating electric machine 21 -> the V-phase lower arm switch QVL and the Q-phase lower arm switch QWL -> the low-potential-side terminal of the smoothing capacitor 23. In this case, the inverter current Idc corresponds to the U-phase current Iu and the sign of the U-phase current Iu is positive. In the current path, the sign of the capacitor current Icf flowing to the smoothing capacitor 23 is negative. That is, the smoothing capacitor 23 is discharged. Here, regarding the sign of the capacitor current Icf, a direction flowing from the connection point of the positive-electrode-side bus Lp with the high-potential-side terminal of the smoothing capacitor 23 to the high-potential-side terminal of the smoothing capacitor 23 is positive.

Fig. 14 shows the current path in a case in which the seventh reactive voltage vector V7 is applied when power running drive control is performed. The current path is: the low potential terminal of the smoothing capacitor 23 -> the direct-current power supply 30 -> the high potential terminal of the smoothing capacitor 23. In this case, a positive capacitor current Icf flows from the direct-current power supply 30 to the smoothing capacitor 23, and the smoothing capacitor 23 is charged. Here, the inverter current Idc does not flow.

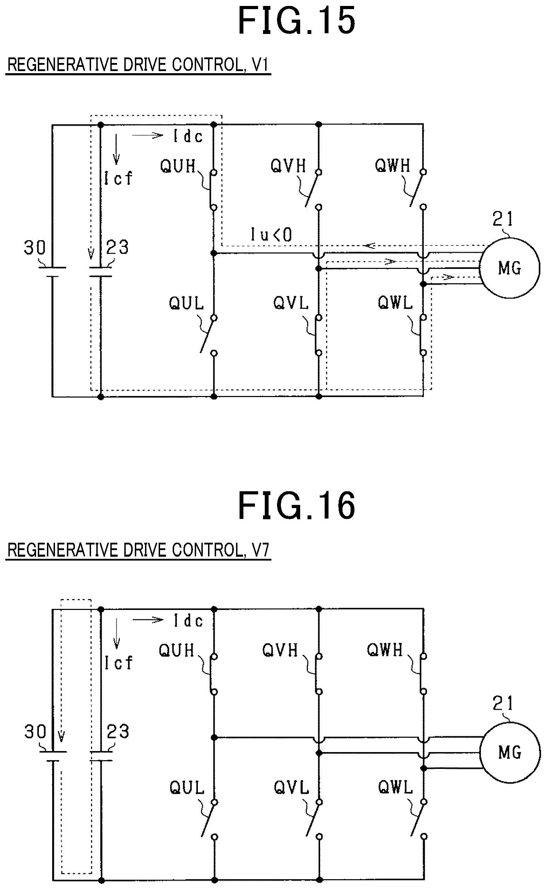

Fig. 15 shows the current path in a case in which the first active voltage vector V1 is applied when regenerative drive control is performed. The current path is: the low-potential-side terminal of the smoothing capacitor 23 -> the V-phase lower arm switch QVL and the W-phase lower arm switch QWL -> the rotating electric machine 21 -> the U-phase upper arm switch QUH -> the high-potential-side terminal of the smoothing capacitor 23. In this case, the inverter current Idc corresponds to the U-phase current Iu, and the sign of U-phase current Iu is negative. In this current path, the sign of the capacitor current Icf flowing to the smoothing capacitor 23 is positive. That is, the smoothing capacitor 23 is charged.

Fig. 16 shows the current path in a case in which the seventh reactive voltage vector V7 is applied when regenerative drive control is performed. The current path is: the high potential terminal of the smoothing capacitor 23 -> the direct-current power supply 30 -> the low potential terminal of the smoothing capacitor 23. In this case, a negative capacitor current Icf flows from the smoothing capacitor 23 to the direct-current power supply 30, and the smoothing capacitor 23 is discharged. Here, the inverter current Idc does not flow.

In this manner, when power running drive control or regenerative drive control is performed in the inverters 22a and 22b, the smoothing capacitor 23 is charged and discharged. In accompaniment, a ripple current flows to the smoothing capacitor 23. Here, the ripple current flowing to the smoothing capacitor 23 may increase depending on the drive states of the rotating electric machines 21a and 21b.

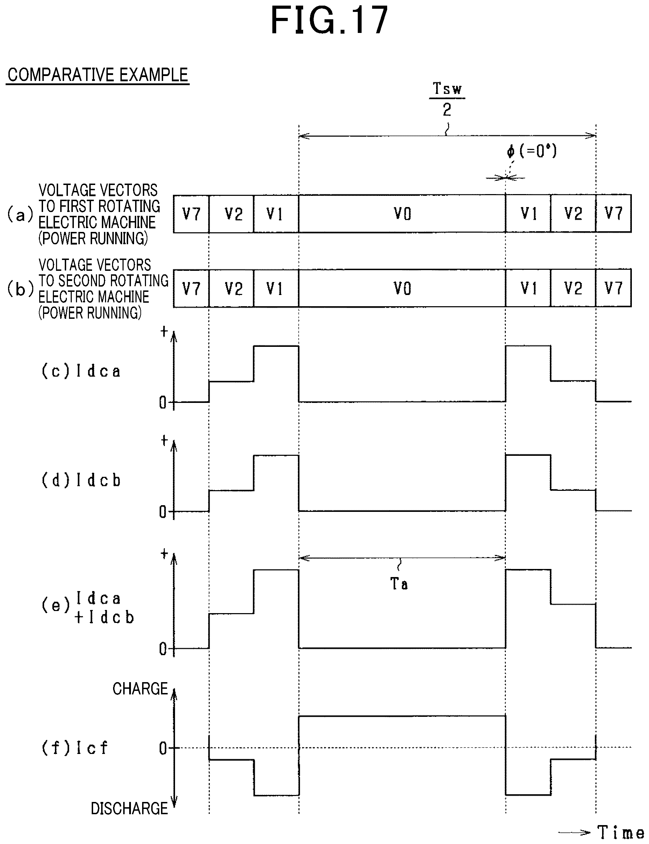

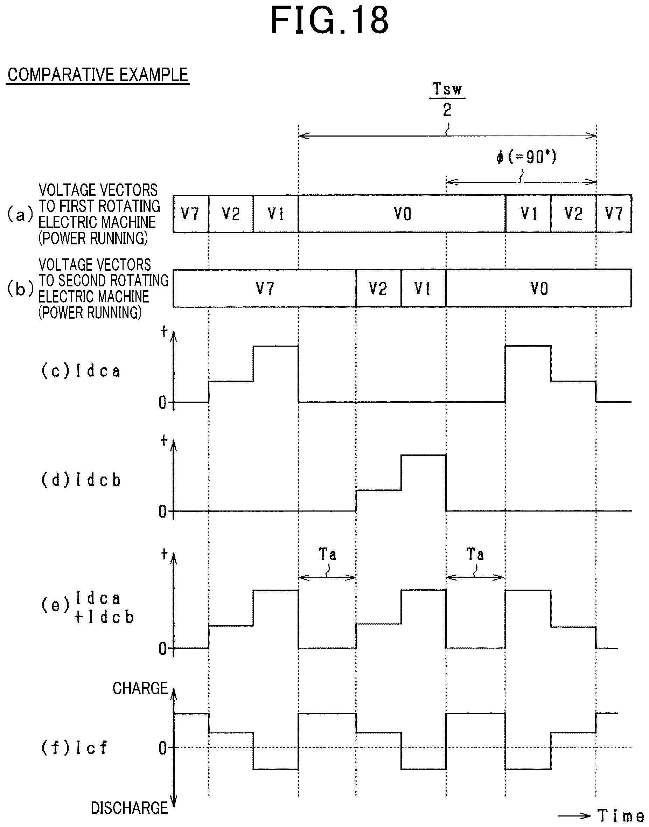

Figs. 17 and 18 show control in a comparative example in which, unlike the present embodiment, the ripple current in the smoothing capacitor 23 increases. In Figs. 17 and 18, (a) shows the voltage vectors to the first rotating electric machine 21a, (b) shows the voltage vectors to the second rotating electric machine 21b, (c) shows transitions in a first inverter current Idea flowing to the first inverter 22a, (d) shows transitions in a second inverter current Idcb flowing to the second inverter 22b, (e) shows transitions in a total value of the first inverter current Idea and the second inverter current Idcb, and (f) shows transitions in the capacitor current Icf. Here, Figs. 17 and 18 show an example in which power running drive control is performed in both rotating electric machines 21a and 21b.

Here, the first inverter current Idea is a current flowing from the connection point of the positive-electrode-side bus Lp with the high-potential-side terminal of the smoothing capacitor 23 to the drain side of each of the upper arm switches QUH to QWH in the first inverter 22a. The second inverter current Idcb is a current flowing from the connection point of the positive-electrode-side bus Lp with the high-potential-side terminal of the smoothing capacitor 23 to the drain side of each of the upper arm switches QUH to QWH in the second inverter 22b.

In Fig. 17, an inter-rotating electric machine phase difference ϕ between the voltage vector to the first rotating electric machine 21a and the voltage vector to the second rotating electric machine 21b is set to 0 degrees. Here, for example, the inter-rotating electric machine phase difference ϕ is a difference between a timing at which the first active voltage vector V1 starts to be applied to the first rotating electric machine 21a and a timing at which the first active voltage vector V1 starts to be applied to the second rotating electric machine 21b within a period that is half of one switching cycle Tsw. For example, one switching cycle Tsw is a period from when the seventh reactive voltage vector V7 is applied until when the next seventh reactive voltage vector V7 is applied. Here, Fig. 17 shows half, i.e. Tsw/2 of one switching cycle.

When the inter-rotating electric machine phase difference ϕ is set to 0 degrees, the output periods of the first and second active voltage vectors V1 and V2 overlap, and the output periods of the zeroth and seventh reactive voltage vectors V0 and V7 overlap in the first rotating electric machine 21a and the second rotating electric machine 21b. In this case, during the output periods of the first and second active voltage vectors V1 and V2, the first inverter current Idea flows in the positive direction, and the second inverter current Idcb flows in the positive direction. As a result, the total value of the first and second inverter currents Idca and Idcb increases. In addition, in the first rotating electric machine 21a and the second rotating electric machine 21b, a period Ta in which the output periods of the zeroth and seventh reactive voltage vectors V0 and V7 overlap occurs. As a result, in the period Ta, a period in which the first and second inverter currents Idca and Idcb both become 0 occurs. In this case, a charging current flowing to the smoothing capacitor 23 increases. As a result of the total value of the first and second inverter currents Idca and Idcb increasing and the period in which the first and second inverter currents Idca and Idcb both become 0 occurring, fluctuations in the capacitor current Icf increase. As a result, the ripple current in the smoothing capacitor 23 increases.

In Fig. 18, the output periods of the first and second active voltage vectors V1 and V2 are shifted from each other in the first and second rotating electric machines 21a and 21b. Specifically, the inter-rotating electric machine phase difference ϕ is set to 90 degrees. As a result, the first and second inverter currents Idca and Idcb are prevented from flowing in the same direction and at the same timing. However, in this case, although the increase in the total value of the first and second inverter currents Idca and Idcb can be prevented, the period Ta in which the output periods of the zeroth and seventh reactive voltage vectors V0 and V7 overlap in the first and second rotating electric machines 21a and 21b occurs. As a result, a period in which the first and second inverter currents Idca and Idcb are both zero occurs. In this case, the charging current flowing to the smoothing capacitor 23 increases. Therefore, the fluctuations in the capacitor current Icf increasing and the ripple current in the smoothing capacitor 23 increasing are a concern.

In Figs. 17 and 18, concern regarding increase in the ripple current in the smoothing capacitor 23 when power running drive control is performed in both rotating electric machines 21a and 21b is described. However, increase in the ripple current is not limited to this case. For example, when regenerative drive control is performed in both rotating electric machines 21a and 21b, the output periods of the zeroth and seventh reactive voltage vectors V0 and V7 may overlap even if the inter-rotating electric machine phase difference ϕ is set to 90 degrees. As a result, the periods in which the first and second inverter currents Idca and Idcb become 0 overlap. In this case, the discharge current flowing to the smoothing capacitor 23 increases. Therefore, fluctuations in the capacitor current Icf increase. As a result, increase in the ripple current in the smoothing capacitor 23 becomes a concern.

In addition, for example, even in a case in which power running drive control is performed in the first rotating electric machine 21a and regenerative drive control is performed in the second rotating electric machine 21b, increase in the ripple current in the smoothing capacitor 23 accompanying increase in the fluctuations in the capacitor current Icf becomes a concern.

Specifically, the output periods of the active voltage vectors V1 to V6 to the first rotating electric machine 21a and the output periods of the reactive voltage vectors V0 and V7 to the second rotating electric machine 21b may overlap. In this case, the smoothing capacitor 23 is discharged by the active voltage vectors V1 to V6 being outputted to the first rotating electric machine 21a, and the smoothing capacitor 23 is discharged by the reactive voltage vectors V0 and V7 being outputted to the second rotating electric machine 21b. As a result, the discharge current flowing to the smoothing capacitor 23 increases, and fluctuations in the capacitor current Icf increase. In addition, the output periods of the reactive voltage vectors V0 and V7 to the first rotating electric machine 21a and the output periods of the active voltage vectors V1 to V6 to the second rotating electric machine 21b may overlap. In this case, the smoothing capacitor 23 is charged by the reactive voltage vectors V0 and V7 being outputted to the first rotating electric machine 21a, and the smoothing capacitor 23 is charged by the active voltage vectors V1 to V6 being outputted to the second rotating electric machine 21b. As a result, the charging current flowing to the smoothing capacitor 23 increases, and fluctuations in the capacitor current Icf increase.

The state described above in which the ripple current in the smoothing capacitor 23 increases occurs because the output periods of the voltage vectors V0 to V7 to the rotating electric machines 21a and 21b are not appropriately adjusted.

According to the present embodiment, the rotating electric machines 21a and 21b are in-wheel motors individually provided in correspondence to the left and right front wheels 11a and 11b. In this case, as the steering angle of the steering wheel becomes larger, the torque difference and the rotation speed difference between the rotating electric machines 21a and 21b increase. Due to the increase in the torque difference and the rotation speed difference between the rotating electric machines 21a and 21b, a situation in which the output periods of the voltage vectors V0 to V7 are no longer suitable output periods from the perspective of reducing the ripple current in the smoothing capacitor 23 occurring more easily becomes a concern.

Therefore, the control apparatus 33 according to the present embodiment performs control to adjust the output periods of the active voltage vectors V1 to V6 to the rotating electric machines 21a and 21b. According to the present embodiment, to adjust the output periods of the active voltage vectors V1 to V6, the 60-degree voltage vector and a 120-degree voltage vector that is two types of active voltage vectors sandwiching the command voltage vector Vtr and having a phase difference of 120 degrees therebetween are used.

The control apparatus 33 adjusts the output periods of the active voltage vectors V1 to V6 by prescribing a ratio of a period in which the 60-degree voltage vector is used and a period in which the 120-degree voltage vector is used, based on a ratio coefficient k (0 ≤ k ≤ 1). Here, the ratio coefficient k prescribes a ratio of the period in which the 120-degree voltage vector is used within a period in which the active voltage vectors V1 to V6 are selected in one switching cycle Tsw. Here, a value (1-k) obtained by subtracting the ratio coefficient k from 1 prescribes the period in which the 60-degree voltage vector is used within the period in which the active voltage vectors V1 to V6 are selected in one switching cycle Tsw.

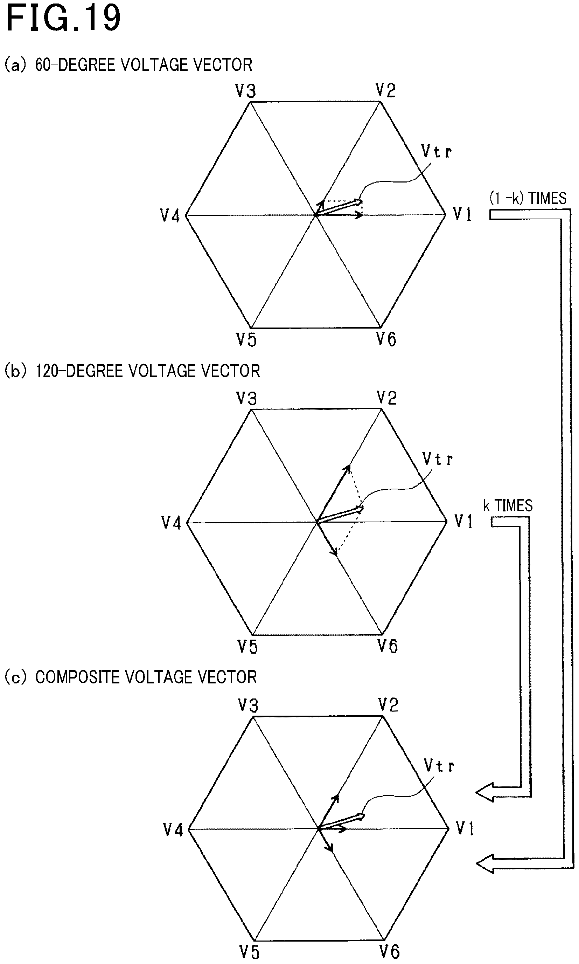

Fig. 19 shows an example in which the output periods of the active voltage vectors V1, V2, and V6 are adjusted in relation to the command voltage vector Vtr sandwiched between the first and second active voltage vectors V1 and V2. In Fig. 19, (a) shows a case in which the command voltage vector Vtr is generated by the 60-degree voltage vector composed of the first and second active voltage vectors V1 and V2, and (b) shows a case in which the command voltage vector Vtr is generated by the 120-degree voltage vector composed of the second and sixth active voltage vectors V2 and V6. A total value of respective lengths of the second and sixth active voltage vectors V2 and V6 that are the 120-degree voltage vector is longer than a total value of respective lengths of the first and second active voltage vectors V1 and V2 that are the 60-degree voltage vector. In other words, the output periods of the second and sixth active voltage vectors V2 and V6 that are the 120-degree voltage vector is longer than the output periods of the first and second active voltage vectors V1 and V2 that are the 60-degree voltage vector in one switching cycle Tsw.

Fig. 19(c) shows a case in which the command voltage vector Vtr is generated by a composite voltage vector of the 60-degree voltage vector multiplied by the coefficient (1-k) and the 120-degree voltage vector multiplied by the coefficient k. As the value of the ratio coefficient k increases within a range of 0 ≤ k ≤ 1, the total value of the respective lengths of the first, second, and sixth active voltage vectors V1, V2, and V6 that are the composite voltage vector increases. As a result, the output periods of the first, second, and sixth active voltage vectors V1, V2, and V6 can be adjusted to be longer in one switching cycle Tsw.

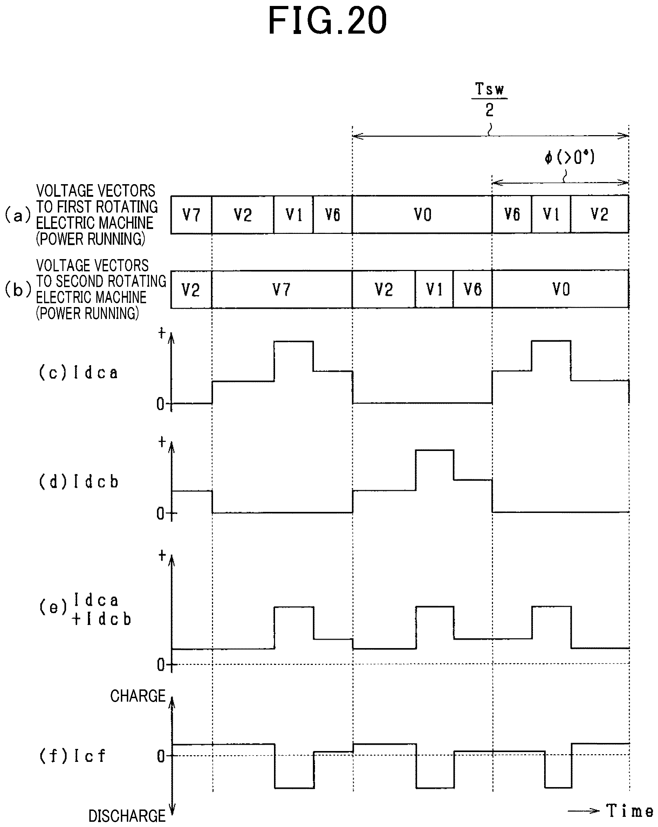

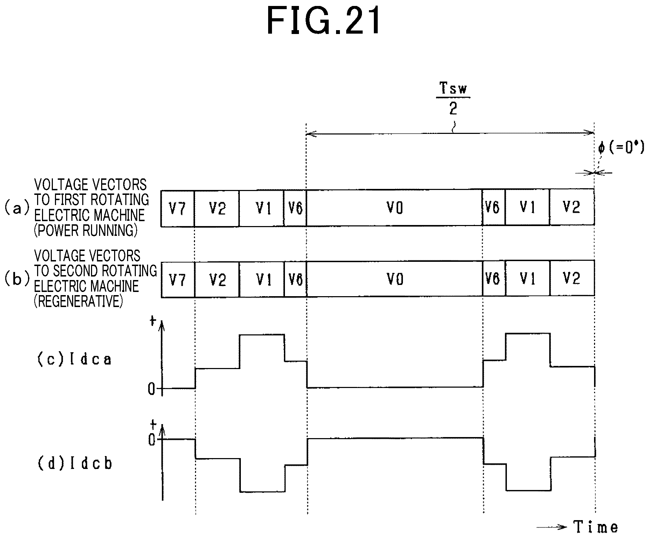

Figs. 20 and 21 show examples of control in which the output periods of the first, second, and sixth active voltage vectors V1, V2, and V6 are adjusted using the composite voltage vector. Figs. 20(a) to (f) correspond to Figs. 17(a) to (f), and Figs. 21(a) to (d) correspond to Figs. 17(a) to (d). In Fig. 20, power running drive control is performed in both rotating electric machines 21a and 21b. In Fig. 21, power running drive control is performed in the first rotating electric machine 21a, and regenerative drive control is performed in the second rotating electric machine 21b.

In Fig. 20, the inter-rotating electric machine phase difference ϕ is made larger than 0 degrees, and the output periods of the reactive voltage vectors V0 and V7 to either of the rotating electric machines 21a and 21b, and the output periods of the active voltage vectors V1, V2, and V6 to the other are set to be the same. For example, the output period of the zeroth reactive voltage vector V0 to the first rotating electric machine 21a and the output periods of the first, second, and sixth active voltage vectors V1, V2, and V6 to the second rotating electric machine 21b are set to be the same. In this case, overlap between the period in which the first inverter current Idea flows in the positive direction and the period in which the second inverter current Idcb flows in the positive direction can be prevented. Increase in the total value of the first and second inverter currents Idca and Idcb can be prevented. In addition, overlap between the output periods of the zeroth and seventh reactive voltage vectors V0 and V7 to the rotating electric machines 21a and 21b can be prevented. Increase in the charging current flowing to the smoothing capacitor 23 can be prevented.

In Fig. 21, the inter-rotating electric machine phase difference ϕ is set to 0 degrees, and the output periods of the active voltage vectors V1, V2, and V6 are set to be the same and the output periods of the reactive voltage vectors V0 and V7 are set to be the same in the rotating electric machines 21a and 21b. During the periods in which the active voltage vectors V1, V2, V6 are outputted, the first inverter current Idea flows in the positive direction and the second inverter current Idcb flows in the negative direction. Therefore, increase in the total value of the first and second inverter currents Idca and Idcb can be prevented. In addition, during the periods in which the reactive voltage vectors V0 and V7 are outputted, the smoothing capacitor 23 is charged by the reactive voltage vectors V0 and V7 being outputted to the first rotating electric machine 21a, and the smoothing capacitor 23 is discharged by the reactive voltage vectors V0 and V7 being outputted to the second rotating electric machine 21b. Therefore, increase in the charging/discharge current flowing to the smoothing capacitor 23 can be prevented.

Even if the output periods of the active voltage vectors V1 to V6 to the rotating electric machines 21a and 21b are adjusted, variations in the capacitor current Icf increase if a difference in magnitude between the inverter currents Idca and Idcb is large. As a result, increase in the ripple current in the smoothing capacitor 23 becomes a concern.

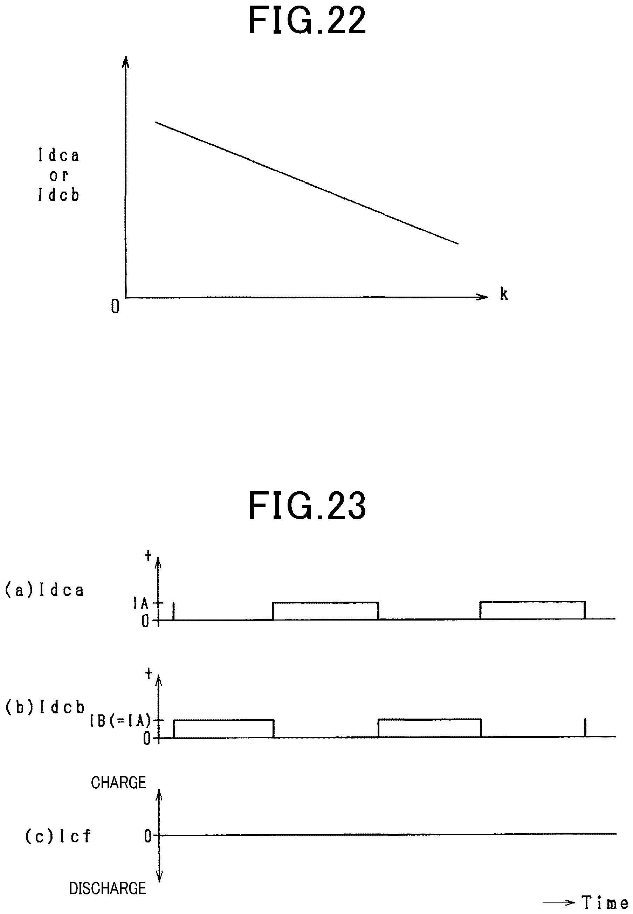

Therefore, the control apparatus 33 controls the voltage vectors V0 to V7 of the rotating electric machines 21a and 21b to bring the magnitudes of the inverter currents Idca and Idcb closer together while adjusting the output periods of the voltage vectors V0 to V7 to the rotating electric machines 21a and 21b by adjusting the value of the ratio coefficient k. As shown in Fig. 22, the control apparatus 33 adjusts the magnitudes of the inverter currents Idca and Idcb using a relationship in which the magnitudes of the inverter currents Idca and Idcb decrease as the ratio coefficient k increases in the rotating electric machines 21a and 21b.

Fig. 23 shows an example of control in which a magnitude IA of the first inverter current Idea and a magnitude IB of the second inverter current Idcb are set to be the same when power running drive control is performed in both the first and second rotating electric machines 21a and 21b. As a result, fluctuations in the capacitor current Icf can be accurately suppressed, and the ripple current in the smoothing capacitor 23 can be accurately reduced.

Fig. 24 shows the steps in control performed by the control apparatus 33. This control is repeatedly performed, for example, at a predetermined control cycle.

At step S10, the rotation speed and the command torque of the first rotating electric machine 21a are acquired. According to the present embodiment, a value calculated based on the detection value of the angle sensor 36 is acquired as the rotation speed of the first rotating electric machine 21a. A value calculated to feedback-control the acquired rotation speed of the first rotating electric machine 21a to the command rotation speed is acquired as the command torque of the first rotating electric machine 21a. The command voltage vector Vtr of the first rotating electric machine 21a is calculated based on the acquired command torque.

At step S11, the rotation speed and the command torque of the second rotating electric machine 21b are acquired. According to the present embodiment, a value calculated based on the detection value of the angle sensor 36 is acquired as the rotation speed of the second rotating electric machine 21b. A value calculated to feedback-control the acquired rotation speed of the second rotating electric machine 21b to the command rotation speed is acquired as the command torque of the second rotating electric machine 21b. The command voltage vector Vtr of the second rotating electric machine 21b is calculated based on the acquired command torque.

At step S12, the drive state of each of the rotating electric machines 21a and 21b is determined. According to the present embodiment, whether both of the rotating electric machines 21a and 21b are in a drive state in which power running drive control or regenerative drive control is being performed is determined. For example, the drive state of each of the rotating electric machines 21a and 21b may be determined based on the calculated command torque. Specifically, the drive state is determined to be a power running drive control state when the calculated command torque is a positive value and a regenerative drive control state when the calculated command torque is a negative value.

When an affirmative determination is made at step S12, the process proceeds to step S13 and a phase shift process is performed. The phase shift process is a process in which the output periods of the active voltage vectors V1 to V6 are shifted from each other in the first and second rotating electric machines 21a and 21b. As a result, the output periods of the active voltage vectors V1 to V6 to either of the rotating electric machines 21a and 21b are shifted within the output periods of the reactive voltage vectors V0 and V7 to the other. According to the present embodiment, the inter-rotating electric machine phase difference ϕ is set to 90 degrees as the phase shift process.

At step S14, active voltage proportions m1 and m2 of the rotating electric machines 21a and 21b are calculated. Here, the active voltage proportions m1 and m2 are proportions of the output periods of the active voltage vectors V1 to V6 in one switching cycle Tsw in the rotating electric machines 21a and 21b. According to the present embodiment, at step S10 and step S11, the active voltage proportions m1 and m2 when the calculated command voltage vector Vtr is realized using the 60-degree voltage vector are calculated.

At step S15, whether a total period of the output periods of the active voltage vectors V1 to V6 to the first rotating electric machine 21a and the output periods of the active voltage vectors V1 to V6 to the second rotating electric machine 21b is the same as one switching cycle Tsw is determined. In other words, whether the output periods of the active voltage vectors V1 to V6 to the first rotating electric machine 21a and the output periods of the reactive voltage vectors V0 and V7 to the second rotating electric machine 21b are the same length is determined. Specifically, whether a relationship [m1-(1-m2)]=0 is established is determined. When an affirmative determination is made at step S15, the output periods of the active voltage vectors V1 to V6 to the rotating electric machines 21a and 21b are determined not to be adjusted. Meanwhile, when a negative determination is made at step S15, the output periods of the active voltage vectors V1 to V6 to the rotating electric machines 21a and 21b are determined to be adjusted. As a result of the process at step S15, the output periods of the active voltage vectors V1 to V6 to the rotating electric machines 21a and 21b can be determined to be in a state where they should be adjusted. According to the present embodiment, the process at step S15 corresponds to a "period determining unit".

When an affirmative determination is made at step S15, the process proceeds to step S16. The 60-degree voltage vector used to generate the command voltage vector Vtr of the rotating electric machines 21a and 21b is selected. According to the present embodiment, the 60-degree voltage vector used to actualize the command voltage vector Vtr at step S10 and step S11 is selected as is. Here, at step S16, the output periods of the active voltage vectors V1 to V6 to the rotating electric machines 21a and 21b are not adjusted because the output periods are already adjusted to the output periods suitable for reducing the ripple current in the smoothing capacitor 23.

At step S17, switching operations of the inverters 22a and 22b are performed. In the switching operations, the active voltage vectors V1 to V6 and the reactive voltage vectors V0 and V7 are alternately outputted based on the selected output periods of the voltage vectors V0 to V7. According to the present embodiment, the process at step S17 corresponds to an "operating unit".

When a negative determination is made at step S15, the process proceeds to step S18 and a first adjustment process is performed. The first adjustment process is a process in which the output periods of the active voltage vectors V1 to V6 to either of the rotating electric machines 21a and 21b and the output periods of the reactive voltage vectors V0 and V7 to the other are set to be the same. Here, the output periods of the active voltage vectors V1 to V6 to either of the rotating electric machines 21a and 21b are periods shifted into the output periods of the reactive voltage vectors V0 and V7 to the other by the phase shift process. According to the present embodiment, the output periods of the active voltage vectors V1 to V6 are adjusted using the composite voltage vector of the 60-degree voltage vector and the 120-degree voltage vector. Subsequently, the process proceeds to step S17, and switching operations are performed based on the output periods of the active voltage vectors V1 to V6 to the rotating electric machines 21a and 21b adjusted at step S18.

When a negative determination is made at step S12, the process proceeds to step S19. Here, a case in which a negative determination is made at step S12 is a case in which the drive state is determined to be that in which power running drive control is performed in either of the rotating electric machines 21a and 21b and regenerative drive control is performed in the other. According to the present embodiment, the process at step S12 corresponds to a "drive determining unit".

At step S19, whether the output periods of the active voltage vectors V1 to V6 to the first rotating electric machine 21a and the output periods of the active voltage vectors V1 to V6 to the second rotating electric machine 21b are the same length is determined. Specifically, whether a relationship (m1-m2)=0 is established is determined. When an affirmative determination is made at step S19, the output periods of the active voltage vectors V1 to V6 to the rotating electric machines 21a and 21b are determined not to be adjusted. Meanwhile, when a negative determination is made at step S19, the output periods of the active voltage vectors V1 to V6 to the rotating electric machines 21a and 21b are determined to be adjusted. As a result of the process at step S19, the output periods of the active voltage vectors V1 to V6 to the rotating electric machines 21a and 21b can be determined to be in a state where they should be adjusted. According to the present embodiment, the process at step S19 corresponds to the "period determining unit".

When an affirmative determination is made at step S19, the process proceeds to step S20. The 60-degree voltage vector used to generate the command voltage vector Vtr of the rotating electric machines 21a and 21b is selected. According to the present embodiment, the 60-degree voltage vector used to generate the calculated command voltage vector Vtr at step S10 and step S11 is selected as is. Subsequently, the process proceeds to step S17. Here, at step S20, the output periods of the active voltage vectors V1 to V6 to the rotating electric machines 21a and 21b are not adjusted because the output periods are already adjusted to the output periods suitable for reducing the ripple current in the smoothing capacitor 23.

When a negative determination is made at step S19, the process proceeds to step S21 and a second adjustment process is performed. The second adjustment process is a process in which the output periods of the active voltage vectors V1 to V6 are set to be the same and the output periods of the reactive voltage vectors V0 and V7 are set to be the same in the rotating electric machines 21a and 21b, while the inter-rotating electric machine phase difference ϕ is set to 0 degrees. According to the present embodiment, the output periods of the active voltage vectors V1 to V6 are adjusted using the composite voltage vector of the 60-degree voltage vector and the 120-degree voltage vector. Subsequently, the process proceeds to step 517. According to the present embodiment, the processes at steps S18 and S21 correspond to a "first selecting unit" and a "second selecting unit". The processes at steps S13, S16, S18, S20, and S21 correspond to an "adjusting unit".

According to the present embodiment described in detail above, the following effects can be obtained.

Even if a state in which the drive states of the rotating electric machines 21a and 21b differ occurs, the output periods of the active voltage vectors V1 to V6 to the rotating electric machines 21a and 21b can be adjusted to suitable output periods based on the drive states of the rotating electric machines 21a and 21b. The ripple current flowing to the smoothing capacitor 23 can be reduced by the switching operations of the inverters 22a and 22b being performed so that the adjusted active voltage vectors V1 to V6 and the reactive voltage vectors V0 and V7 are alternately outputted.

The first adjustment process is performed under a condition that both rotating electric machines 21a and 21b are determined to be in the drive state in which power running drive control or regenerative drive control is performed. As a result, the output periods of the active voltage vectors V1 to V6 to either of the rotating electric machines 21a and 21b and the output periods of the reactive voltage vectors V0 and V7 to the other are set to be the same. Therefore, occurrence of a period in which the output periods of the active voltage vectors V1 to V6 overlap each other, and a period in which the output periods of the reactive voltage vectors V0 and V7 overlap each other in the rotating electric machines 21a and 21b can be prevented. Consequently, the ripple current flowing to the smoothing capacitor 23 can be accurately reduced.

The second adjustment process is performed under a condition that the rotating electric machines 21a and 21b are determined to be in the drive states in which power running drive control is performed in one and regenerative drive control is performed in the other. As a result, occurrence of a period in which the output periods of the active voltage vectors V1 to V6 to the first rotating electric machine 21 and the output periods of the reactive voltage vectors V0 and V7 to the second rotating electric machine 21b overlap can be prevented. In addition, occurrence of a period in which the output periods of the reactive voltage vectors V0 and V7 to the first rotating electric machine 21 and the output periods of the active voltage vectors V1 to V6 to the second rotating electric machine 21b overlap can be prevented. Consequently, the ripple current flowing to the smoothing capacitor 23 can be accurately reduced.

The ripple current flowing to the smoothing capacitor 23 can be accurately reduced by the magnitudes of the inverter currents Idca and Idcb being brought closer to each other.

In the vehicle 10 that travels by the left and right front wheels 11a and 11b being rotatably driven, as the steering angle of the vehicle 10 becomes larger, the length of the trajectory drawn by the inner wheel, of the left and right front wheels 11a and 11b, during cornering becomes shorter than the length of the trajectory drawn by the outer wheel. Therefore, the torque difference and the rotation speed difference between the rotating electric machines 21a and 21b provided in the left and right front wheels 11a and 11b increase. In this case, in the rotating electric machines 21a and 21b provided in the left and right front wheels 11a and 11b, a situation in which the output periods of the active voltage vectors V1 to V6 are no longer suitable output periods from the perspective of reducing the ripple current in the smoothing capacitor 23 occurring more easily becomes a concern. Therefore, there is great advantage in using the above-described configuration in which the output periods of the active voltage vectors V1 to V6 to the rotating electric machines 21a and 21b are adjusted.

### <Second embodiment>

A second embodiment will be described below with reference to the drawings, mainly focusing on differences from the first embodiment.

According to the present embodiment, in addition to the determination regarding whether the total period of the output periods of the active voltage vectors V1 to V6 to the rotating electric machines 21a and 21b is the same as one switching cycle Tsw, a determination regarding whether the total period is shorter than one switching cycle Tsw is performed. Specifically, as shown in Fig. 25, when a negative determination is made at step S15, the process proceeds to step S22. At step S22, whether m1 + m2 < 1 is established is determined. The process at step S22 is performed because, when a total value of the active voltage proportions m1 and m2 is greater than 1, adjustment of the output periods of the active voltage vectors V1 to V6 by the composite voltage vector cannot be performed. When an affirmative determination is made at step S22, the process proceeds to step S 18. Meanwhile, when a negative determination is made at step S22, the process proceeds to step 516. According to the present embodiment, the processes at step S15 and step S22 correspond to the "period determining unit".

According to the process at step S22 according to the present embodiment, the output periods of the active voltage vectors V1 to V6 by the composite voltage vector is appropriately determined to be in a state where they cannot be adjusted, and the switching operations can be appropriately determined to be in a state where they should be performed using the 60-degree voltage vector.

### <Third embodiment>

A third embodiment will be described below with reference to the drawings, mainly focusing on the differences from the first embodiment.

According to the present embodiment, instead of the output periods of the active voltage vectors V1 to V6 to the rotating electric machines 21a and 21b being adjusted, the output periods of the active voltage vectors V1 to V6 to either of the rotating electric machines 21a and 21b are adjusted and the output periods of the active voltage vectors V1 to V6 to the other are not adjusted.

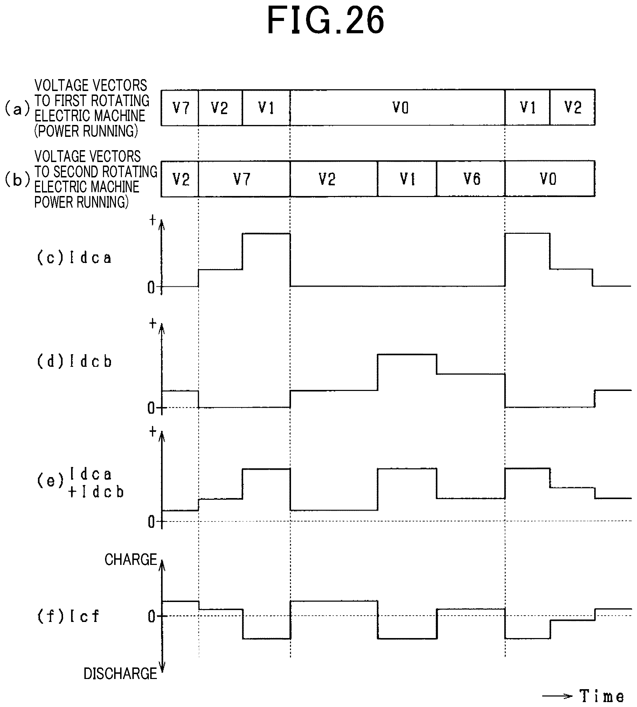

Fig. 26 shows an example of control in which the output periods of the active voltage vectors V1 to V6 to the first rotating electric machine 21a are not adjusted, but the output periods of the active voltage vectors V1 to V6 to the second rotating electric machine 21b are adjusted. In Fig. 26, (a) to (f) correspond to Figs. 17(a) to (f). In Fig. 26, power running drive control is performed in both rotating electric machines 21a and 21b.

As shown in Fig. 26(d), as a result of the output periods of the active voltage vectors V1, V2, and V6 to the second rotating electric machine 21b being adjusted, the output period of the zeroth reactive voltage vector V0 to the first rotating electric machine 21a and the output periods of the active voltage vectors V1, V2, and V6 to the second rotating electric machine 21b are set to be the same. According to the present embodiment, the second rotating electric machine 21b corresponds to a "specific rotating electric machine".

According to the present embodiment, the ripple current flowing to the smoothing capacitor 23 can be reduced while processing load on the control apparatus 33 is reduced, compared to a case in which the output periods of the active voltage vectors V1 to V6 to the rotating electric machines 21a and 21b are both adjusted.

A fourth embodiment will be described below with reference to the drawings, mainly focusing on the differences from the first embodiment.

According to the present embodiment, in the first adjustment process and the second adjustment process, field weakening control is performed instead of the composite voltage vector of the 60-degree voltage vector and the 120-degree voltage vector being used.

The control apparatus 33 calculates a d-axis command current and a q-axis command current of each of the rotating electric machines 21a and 21b based on the acquired command torque. The control apparatus 33 calculates a dq-axis command voltage vector Va* of each of the rotating electric machines 21a and 21b based on the calculated d- and q-axis command currents. The control apparatus 33 calculates the command voltage vector Vtr of each of the rotating electric machines 21a and 21b based on the calculated dq-axis command voltage vector Va*.

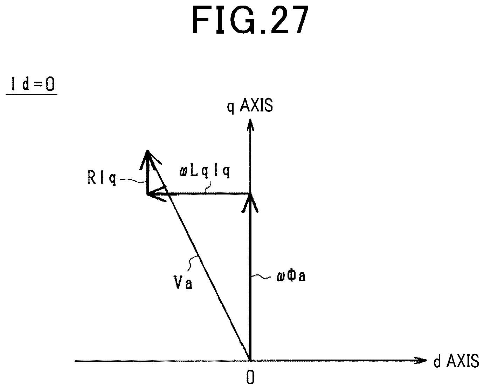

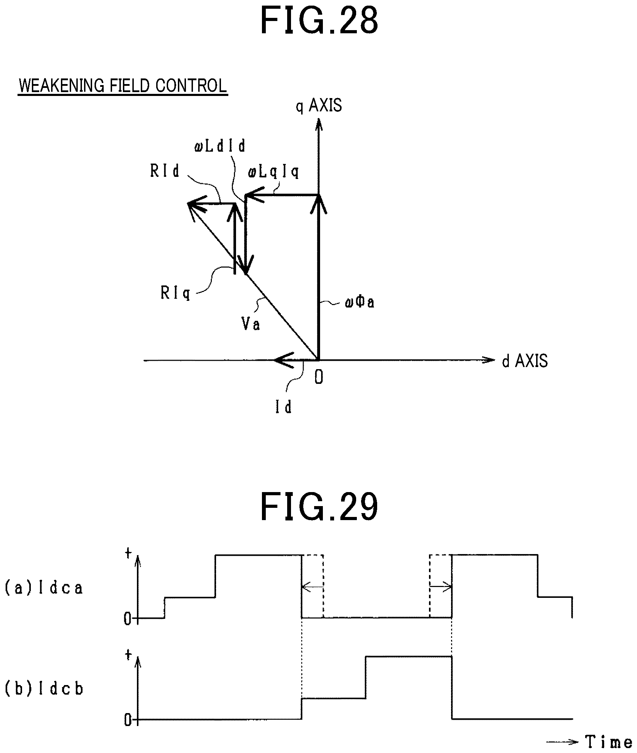

Here, a dq-axis voltage vector Va when field weakening control is performed will be supplementarily described. Figs. 27 and 28 are vector diagrams of the dq-axis coordinate system. Fig. 27 shows the dq-axis voltage vector Va when field weakening control is not performed (Id=0), and Fig. 28 shows the dq-axis voltage vector Va when field weakening control is performed. In Figs. 27 and 28, ω × Φa is an induced voltage due to armature interlinkage flux, ω × Lq × Iq is an induced voltage due to q-axis armature reaction flux, and R × Iq is voltage drop due to armature winding resistance of the q-axis current. In Fig. 28, Id is a d-axis current, ω × Ld × Id is an induced voltage due to d-axis armature reaction flux, and R × Id is voltage drop due to armature winding resistance of the d-axis current. Here, ω is an electrical angular velocity of the rotating electric machine.

The dq-axis voltage vector Va when field weakening control not performed is a vector obtained by the induced voltage ω × Φa due to the armature linkage flux, the induced voltage ω × Lq × Iq due to the q-axis armature reaction flux, and the voltage drop R × Iq due to the armature winding resistance of the q-axis current being added together. Meanwhile, the dq-axis voltage vector Va when field weakening control is performed is a vector obtained by the induced voltage ω × Φa due to the armature linkage flux, the induced voltages ω × Ld × Id and ω × Lq × Iq due to the d- and q-axis armature reaction fluxes, and the voltage drops R × Id and R × Iq due to the armature winding resistance of the d- and q-axis currents being added together.

As a result of field weakening control being performed, increase in the induced voltage due to the armature reaction flux is suppressed. Therefore, the magnitude of the dq-axis voltage vector Va when field weakening control is performed is smaller than the magnitude of the dq-axis voltage vector Va when field weakening control is not performed.

The control apparatus 33 increases a negative d-axis command current when making adjustments to shorten the output periods of the active voltage vectors V1 to V6. In this case, the control apparatus 33 reduces the magnitude of the dq-axis command voltage vector Va*. The control apparatus 33 calculates the magnitude of the command voltage vector Vtr to be smaller as the magnitude of the dq-axis command voltage vector Va* becomes smaller. As a result, adjustments are made so that the output periods of the active voltage vectors V1 to V6 are shortened.

In the process at step S18 in Fig. 24, above, the control apparatus 33 makes adjustments to shorten the output periods of the active voltage vectors V1 to V6 by performing field weakening control instead of performing the first adjustment process. In addition, in the process at step S21 in Fig. 24, above, the control apparatus 33 makes adjustments to shorten the output periods of the active voltage vectors V1 to V6 by performing field weakening control instead of performing the second adjustment process.

Fig. 29 shows an example of control in which the output periods of the active voltage vectors V1 to V6 are adjusted by field weakening control being performed. In Fig. 29, (a) shows transitions in the first inverter current Idea flowing to the first inverter 22a, and (b) shows transitions in the second inverter current Idcb flowing to the second inverter 22b. Here, Fig. 29 shows an example in which power running drive control is performed in both rotating electric machines 21a and 21b.

As shown in Fig. 29(a), the output periods of the active voltage vectors V1 to V6 of the first inverter current Idea are set to be shorter than the output periods of the active voltage vectors V1 to V6 before adjustment that are indicated by a broken line. As a result, the output periods of the reactive voltage vectors V0 and V7 to the first rotating electric machine 21a are made longer. Consequently, the output periods of the reactive voltage vectors V0 and V7 to the first rotating electric machine 21a and the output periods of the active voltage vectors V1 to V6 to the second rotating electric machine 21b are set to be the same.

According to the present embodiment, the output periods of the active voltage vectors V1 to V6 to the rotating electric machines 21a and 21b can be accurately adjusted by field weakening control being performed.

### <Fifth embodiment>

A fifth embodiment will be described below with reference to the drawings, mainly focusing on the differences from the first embodiment.

In the vehicle 10, the rotating electric machine serving as the in-wheel motor is not limited to being provided in the left and right front wheels 11a and 11b. For example, in a vehicle having two wheels each at the front and rear of the vehicle, rotating electric machines may be provided in the two wheels on the rear side of the vehicle or in the four wheels at the front and rear of the vehicle. However, in a vehicle in which at least either of the front and rear of the vehicle has one wheel, rotating electric machines may be provided in three wheels at the front and rear of the vehicle.

An example of control for reducing the ripple current in a smoothing capacitor in a vehicle in which first to third rotating electric machines are respectively provided in three drive wheels will be described below. First to third inverters are provided in correspondence to the first to third rotating electric machines. The smoothing capacitor is common to the first to third inverters.

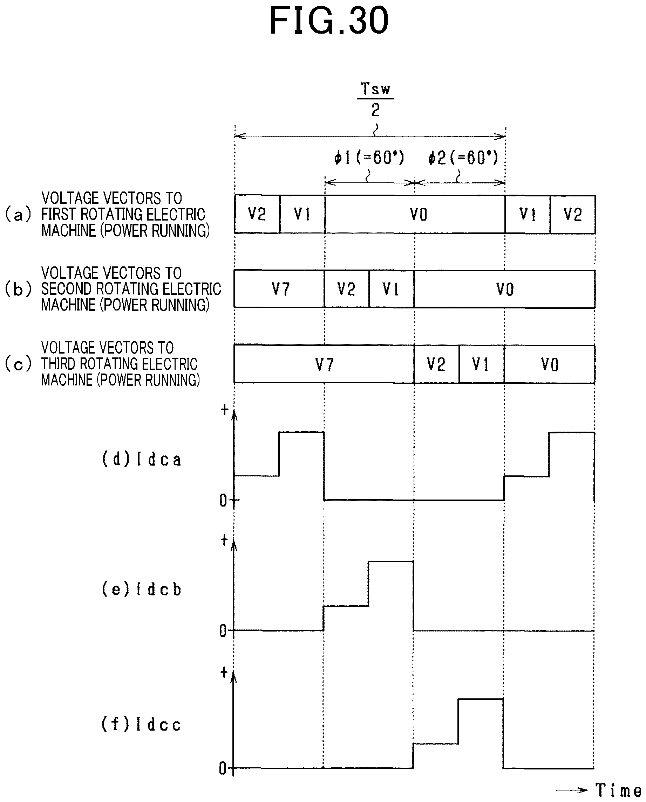

In Fig. 30, (a) shows voltage vectors to the first rotating electric machine, (b) shows voltage vectors to the second rotating electric machine, (c) shows voltage vectors to the third rotating electric machine, (d) shows transitions in the first inverter current Idea, (e) shows transitions in the second inverter current Idcb, and (f) shows transitions in a third inverter current Idcc. Here, Fig. 30 shows an example in which power running drive control is performed in all first to third rotating electric machines.

In Fig. 30, the output periods of the first and second active voltage vectors V1 and V2 in the first to third rotating electric machines are shifted from one another. Specifically, a first inter-rotating electric machine phase difference ϕ1 is set to 60 degrees, and a second inter-rotating electric machine phase difference ϕ2 is set to 60 degrees. Here, for example, the first inter-rotating electric machine phase difference ϕ1 is a difference between a timing at which the zeroth reactive voltage vector V0 starts to be applied to the first rotating electric machine 21a and a timing at which the zeroth reactive voltage vector V0 starts to be applied to the second rotating electric machine 21b within a period that is half of one switching cycle Tsw. For example, the second inter-rotating electric machine phase difference ϕ2 is a difference between a timing at which the zeroth reactive voltage vector V0 starts to be applied to the second rotating electric machine and a timing at which the zeroth reactive voltage vector V0 starts to be applied to the third rotating electric machine within a period that is half of one switching cycle Tsw.

As shown in Fig. 30, the output period of the zeroth reactive voltage vector V0 of the first rotating electric machine and a total output period of the first and second active voltage vectors V1 and V2 of the second and third rotating electric machines are set to be the same. Here, the output period of the reactive voltage vector of the second rotating electric machine and the total output period of the active voltage vectors of the first and third rotating electric machines are also set to be the same. The output period of the reactive voltage vector of the third rotating electric machine and the total output period of the active voltage vectors of the first and second rotating electric machine are also set to be the same. As a result, periods during which first to third inverter currents Idca to Idcc flow can be prevented from overlapping one another. In addition, occurrence of a period in which the output periods of the reactive voltage vectors V0 and V7 of the first to third rotating electric machines overlap can be prevented.

Here, when the output period of the zeroth reactive voltage vector V0 of the first rotating electric machine and the total output period of the first and second active voltage vectors V1 and V2 of the second and third rotating electric machines are not the same, the composite voltage vector of the 60-degree vector and the 120-degree voltage vector may be used. As a result, the output periods of the active voltage vectors V1 to V6 are adjusted. Consequently, the periods during which the first to third inverter currents Idca to Idcc flow can be suppressed from overlapping one another, and the occurrence of a period in which the output periods of the reactive voltage vectors V0 and V7 of the first to third rotating electric machines overlap can be suppressed.

### <Sixth embodiment>

A sixth embodiment will be described below with reference to the drawings, mainly focusing on the differences from the first embodiment.

According to the present embodiment, an adjustment process is performed from a perspective of reducing a current flowing to the direct-current power supply 30, in addition to the perspective of reducing the ripple current in the smoothing capacitor 23.

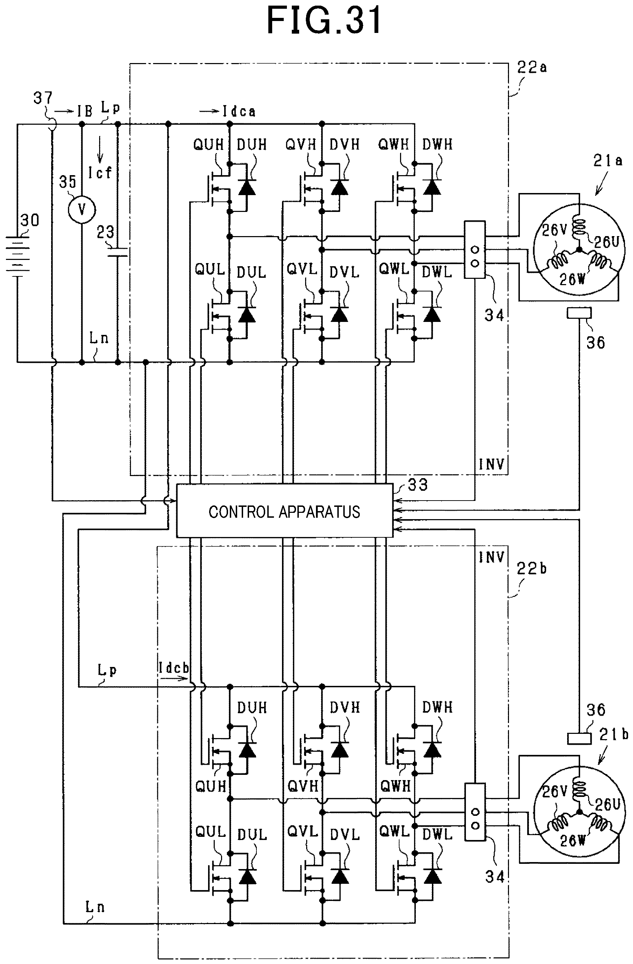

Fig. 31 shows a configuration diagram of a control system according to the present embodiment. The control system includes a power supply current sensor 37. The power supply current sensor 37 detects a current IB flowing to the direct-current power supply 30. Here, in Fig. 31, configurations that are identical to the configurations shown in Fig. 2 above are given the same reference numbers for convenience.

As a result of resonance of a current occurring due to inductance in wiring connecting the direct-current power supply 30 and the smoothing capacitor 23 and capacitance of the smoothing capacitor 23, the current IB flowing to the direct-current power supply 30 may be amplified in relation to the inverter current Idc. Here, the wiring connecting the direct-current power supply 30 and the smoothing capacitor 23 is, for example, the positive-electrode-side bus Lp and the negative-electrode-side bus Ln. In this state, a current larger than a rated current of the direct-current power supply 30 may flow to the direct-current power supply 30, and reliability of the direct-current power supply 30 may decrease.

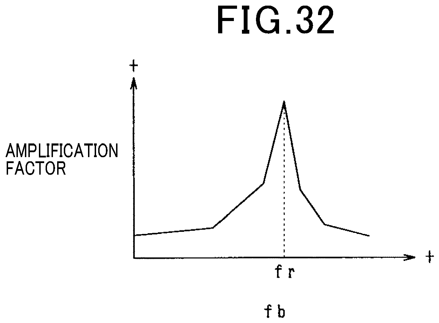

Specifics will be described with reference to propagation characteristics shown in Fig. 32. The propagation characteristic in Fig. 32 is a diagram showing a relationship between an amplification factor (=IB/Idc) that is a ratio of the current IB flowing to the direct-current power supply 30 to the inverter current Idc, and a frequency fb of the current IB flowing to the direct-current power supply 30. The amplification factor becomes maximum at a resonance frequency fr that is prescribed by the inductance in the wiring such as the positive-electrode-side bus Lp and the negative-electrode-side bus Ln, and the capacitance of the smoothing capacitor 23. The amplification factor gradually decreases as the frequency fb of the current IB flowing to the direct-current power supply 30 shifts away from the resonance frequency. In this case, when the frequency fb of the current IB flowing to the direct-current power supply 30 is the resonance frequency fr or a frequency near the resonance frequency fr, the current IB flowing to the direct-current power supply 30 is amplified in relation to the inverter current Idc, and an unstable state in which a large current flows to the direct-current power supply 30 may occur. In this unstable state, a current larger than the rated current of the direct-current power supply 30 may flow to the direct-current power supply 30, and reliability of the direct-current power supply 30 may decrease.

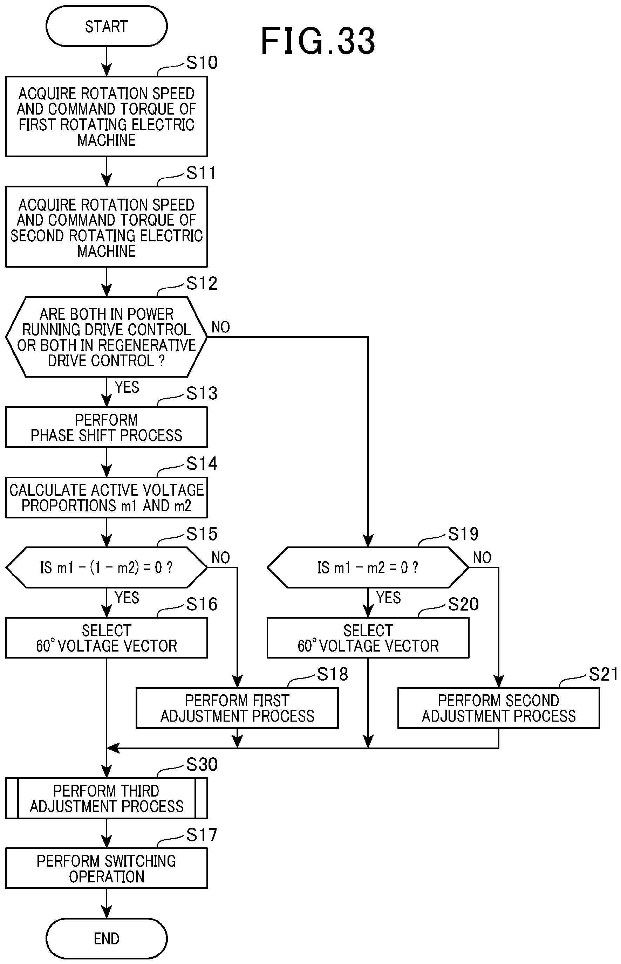

Therefore, according to the present embodiment, the control apparatus 33 performs a third adjustment process in which output modes of the voltage vectors V0 to V7 to the rotating electric machines 21a and 21b are adjusted to change the frequency fb of the current IB flowing to the direct-current power supply 30. According to the present embodiment, as shown in Fig. 33, after the processes at steps S16, S18, S20, and S21, the process proceeds to step S30, and the control apparatus 33 performs the third adjustment process. After the process at step S30, the process proceeds to step S17.

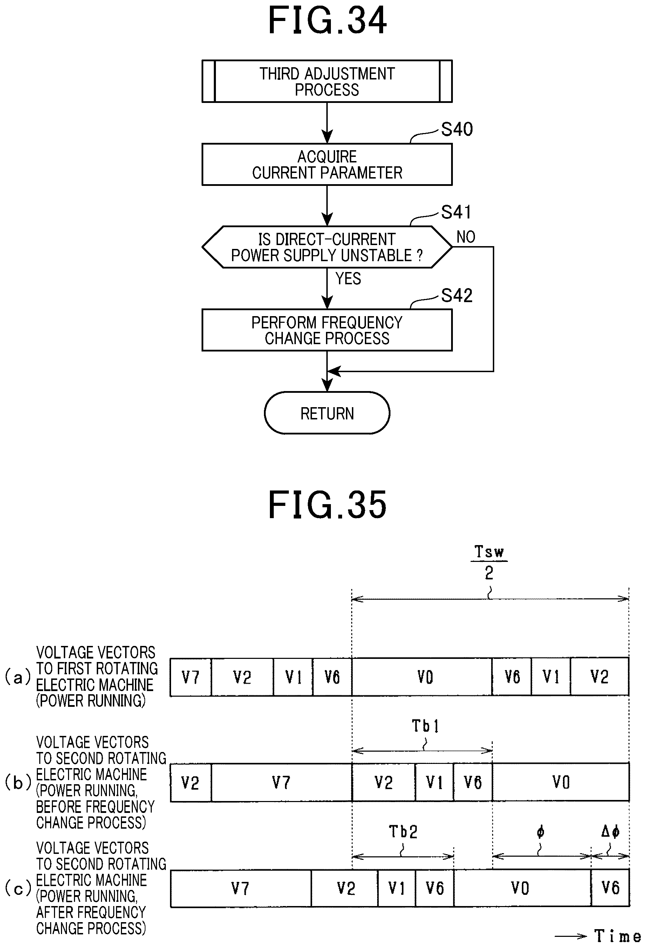

Fig. 34 shows the processing steps in the third adjustment process at step S30 in Fig. 33, above.

At step S40, a current parameter is acquired. According to the present embodiment, the current parameter is the current IB flowing to the direct-current power supply 30. As the current IB flowing to the direct-current power supply 30, the detection value of the power supply current sensor 37 may be used.

At step S41, whether the direct-current power supply 30 is in an unstable state is determined based on the current parameter. According to the present embodiment, whether the amplitude of the current IB flowing to the direct-current power supply 30 exceeds a current threshold is determined. When a negative determination is made at step S41, the direct-current power supply 30 is determined to be in a stable state, and the third adjustment process is ended. Meanwhile, when an affirmative determination is made at step S41, the direct-current power supply 30 is determined to be in an unstable state, and the process proceeds to step S42. Here, instead of whether the amplitude of the current IB flowing to the direct-current power supply 30 exceeds the current threshold being determined, whether an effective value of the current IB flowing to the direct-current power supply 30 exceeds the current threshold may be determined.

At step S42, a frequency change process is performed. The frequency change process is a process in which the frequency fb of the current flowing to the direct-current power supply 30 is changed. According to the present embodiment, in the frequency change process, the frequency fb of the current IB flowing to the direct-current power supply 30 is lowered to shift away from the resonance frequency fr.

In the frequency change process, the control apparatus 33 shortens an overlap period in which the output periods of the active voltage vectors V1 to V6 to the first rotating electric machine 21a and the output periods of the reactive voltage vector V0 and V7 to the second rotating electric machine 21b overlap. Here, a case in which the third adjustment period is performed after the first adjustment period at step S18 will be described. After the first adjustment process, as shown in Fig. 20, above, the inter-rotating electric machine phase difference ϕ is set to a value greater than 0 degrees. In the frequency change process, the control apparatus 33 reduces the inter-rotating electric machine phase difference ϕ by a predetermined phase difference Δϕ set in advance by shifting the output periods of the voltage vectors V0, V1, V2, V6, and V7 to the rotating electric machines 21a and 21b from each other. As a result, the overlap period is shortened.

Fig. 35 shows an example of a case in which the voltage vectors to the second rotating electric machine 21b are shifted by the frequency change process being performed. In Fig. 35, (a) shows the voltage vectors to the first rotating electric machine 21a, (b) shows the voltage vectors to the second rotating electric machine 21b before the frequency change process is performed, and (c) shows the voltage vectors to the second rotating electric machine 21b after the frequency change process is performed. In the voltage vectors to the rotating electric machines 21a and 21b after the frequency change process is performed, the inter-rotating electric machine phase difference ϕ is reduced by the predetermined phase difference Δϕ corresponding to the output period of the sixth active voltage vector V6. As a result, in a period that is half of one switching cycle Tsw, an overlap period Tb2 after the frequency change process is performed is shorter by the output period of the sixth active voltage vector V6 than an overlap period Tb1 before the frequency change process is performed. Here, in Fig. 35, the inter-rotating electric machine phase difference ϕ is indicated as being a difference between the timing at which the sixth active voltage vector V6 starts to be applied to the first rotating electric machine 21a and the timing at which the sixth active voltage vector V6 starts to be applied to the second rotating electric machine 21b, as an example.

As a result of the frequency change process being performed, the overlap period between the output periods of the active voltage vectors V1 to V6 to the first rotating electric machine 21a and the output periods of the reactive voltage vectors V0 and V7 to the second rotating electric machine 21b is shortened. As a result, the number of oscillations in a total current of the first inverter current Idea and the second inverter current Idcb within one switching cycle Tsw is reduced. Therefore, the frequency of the total current of the first inverter current Idea and the second inverter current Idcb is lowered. In accompaniment, the frequency fb of the current IB flowing to the direct-current power supply 30 can be lowered so as to shift away from the resonance frequency fr.

In the frequency change process, the control apparatus 33 may lower the frequency fb of the current IB flowing to the direct-current power source 30 so that the amplitude of the current IB flowing to the direct-current power source 30 is reduced. For example, the control apparatus 33 may end the frequency change process under a condition that the amplitude of the current IB flowing to the direct-current power supply 30 is determined to be smaller than a predetermined current amplitude value after the inter-rotating electric machine phase difference ϕ is reduced by the predetermined phase difference. Here, the current amplitude value may be set to a value smaller than the current threshold value. Meanwhile, when determined that the above-described condition is not met, the control apparatus 33 may further reduce the inter-rotating electric machine phase difference ϕ by the predetermined phase difference. As a result, the frequency fb of the current IB flowing to the direct-current power supply 30 is lowered so that the amplitude of the current IB flowing to the direct-current power supply 30 decreases. Here, instead of whether the above-described condition is met being determined, the control apparatus 33 may determine whether the effective value of the current IB flowing to the direct-current power supply 30 is smaller than a predetermined effective current value.

According to the present embodiment, each of the voltage vectors V0 to V7 to the rotating electric machines 21a and 21b can be adjusted to an appropriate output mode based on the current IB flowing to the direct-current power supply 30. As a result of the switching operations of the inverters 22a and 22b being performed to output the adjusted voltage vectors, the frequency fb of the current IB flowing to direct-current power supply 30 is lowered. As a result, the frequency fb of the current IB flowing to the direct-current power supply 30 can be shifted away from the resonance frequency fr. Consequently, occurrence of a situation in which a current larger than the rated current of the direct-current power supply 30 flows and reliability of the direct-current power supply 30 decreases can be suppressed.

When the amplitude of the current IB flowing to the direct-current power supply 30 is determined to exceeds the current threshold, the overlap period between the output periods of the active voltage vectors V1 to V6 to the first rotating electric machine 21a and the output periods of the reactive voltage vectors V0 and V7 to the second rotating electric machine 21b is shortened. As a result, the frequency fb of the current IB flowing to the direct-current power supply 30 is lowered so that the amplitude of the current IB flowing to the direct-current power supply 30 decreases. As a result, the occurrence of a situation in which a current larger than the rated current flows to the direct-current power supply 30 can be accurately suppressed.

### <Variation examples according to the sixth embodiment>

Here, the sixth embodiment may be modified in the following manner.

The current parameter is not limited to the current IB flowing to the direct-current power supply 30. For example, the current parameter may be the terminal voltage of the smoothing capacitor 23. In this case, the terminal voltage of the smoothing capacitor 23 may be acquired in the process at step S40. As the terminal voltage of the smoothing capacitor 23, the detection value of the voltage sensor 35 may be used. At step S41, whether an amplitude of the terminal voltage of the smoothing capacitor 23 exceeds a voltage threshold may be determined. In this case, the control system may not include the power supply current sensor 37. Here, instead of whether the amplitude of the terminal voltage of the smoothing capacitor 23 exceeds the voltage threshold being determined, whether an effective value of the terminal voltage of the smoothing capacitor 23 exceeds the voltage threshold may be determined.

In the process at step S40, instead of the detection value of the power supply current sensor 37 being acquired, an estimation value of the current IB flowing to the direct-current power supply 30 may be acquired. As the estimation value of the current IB flowing to the direct-current power supply 30, a value estimated based on at least either of the detection value of the phase current sensor 34 and the detection value of the voltage sensor 35, and the voltage vectors V0 to V7 to the rotating electric machines 21a and 21b can be used. In this case, the control system may not include the power supply current sensor 37.

In the frequency change process, the overlap period in which the output periods of the active voltage vectors V1 to V6 to the first rotating electric machine 21a and the output periods of the reactive voltage vector V0 and V7 to the second rotating electric machine 21b overlap may be lengthened instead of shortened. Here, a case in which the third adjustment process is performed after the second adjustment process at step S21 will be described. In this case, as shown in Fig. 21 above, the inter-rotating electric machine phase difference ϕ is set to 0 degrees. In the frequency change process, the control apparatus 33 increases the inter-rotating electric machine phase difference ϕ by a predetermined phase difference set in advance by shifting the output periods of the voltage vectors V0, V1, V2, V6, and V7 to the rotating electric machines 21a and 21b from each other. As a result, the overlap period is lengthened.

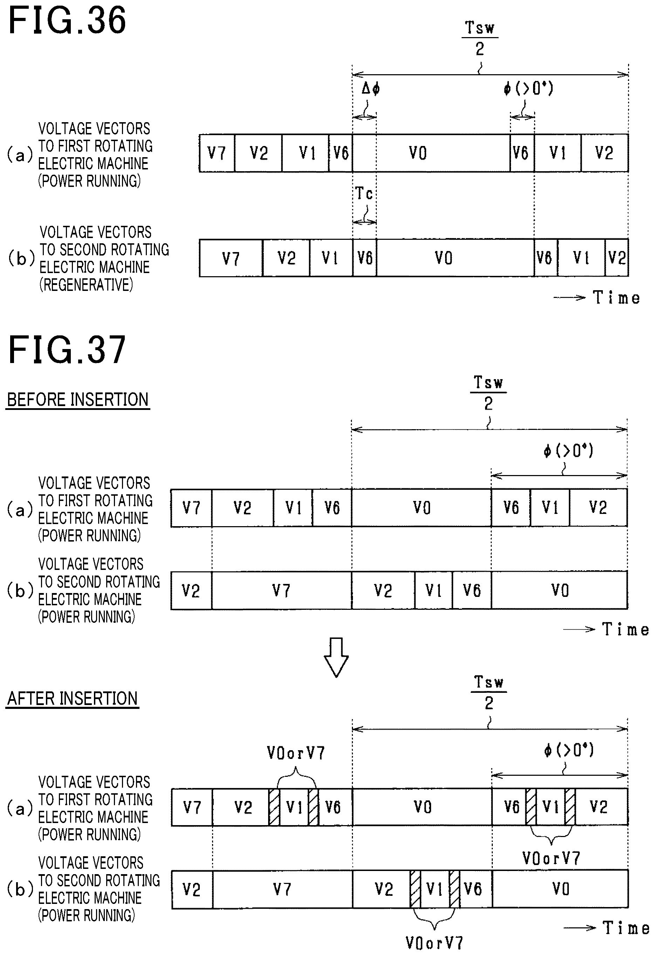

Fig. 36 shows an example of a case in which the voltage vectors to the second rotating electric machine 21b are shifted by the frequency change process being performed. In Fig. 36, (a) shows the voltage vectors to the first rotating electric machine 21a, and (b) shows the voltage vectors to the second rotating electric machine 21b after the frequency change process is performed. Fig. 36 shows an example of a case in which the frequency change process is performed and the inter-rotating electric machine phase difference ϕ is increased by the predetermined phase difference Δϕ corresponding to the output period of the sixth active voltage vector V6. As a result, an overlap period Tc is lengthened by the output period of the sixth active voltage vector V6 in a period that is half of one switching cycle Tsw. Here, in Fig. 36, the inter-rotating electric machine phase difference ϕ is indicated as being the difference between the timing at which the sixth active voltage vector V6 starts to be applied to the first rotating electric machine 21a and the timing at which the sixth active voltage vector V6 starts to be applied to the second rotating electric machine 21b, as an example. The overlap period Tc is indicated as being the output period of the sixth active voltage vector V6 as an example.

As a result of the frequency change process being performed, the overlap period between the output periods of the active voltage vectors V1 to V6 to the first rotating electric machine 21a and the output periods of the reactive voltage vectors V0 and V7 to the second rotating electric machine 21b is lengthened. As a result, the number of oscillations in the total current of the first inverter current Idea and the second inverter current Idcb within one switching cycle Tsw is increased. Therefore, the frequency of the total current of the first inverter current Idea and the second inverter current Idcb is increased. In accompaniment, the frequency fb of the current IB flowing to the direct-current power supply 30 can be increased so as to be shifted away from the resonance frequency fr.

In the frequency change process, the control apparatus 33 may increase the frequency fb of the current IB flowing to the direct-current power source 30 so that the amplitude of the current IB flowing to the direct-current power source 30 is decreased. For example, the control apparatus 33 may end the frequency change process under a condition that the amplitude of the current IB flowing to the direct-current power supply 30 is determined to be smaller than a predetermined current amplitude value after the inter-rotating electric machine phase difference ϕ is increased by the predetermined phase difference. Here, the current amplitude value may be set to a value smaller than the current threshold value. Meanwhile, when determined that the above-described condition is not met, the control apparatus 33 may further increase the inter-rotating electric machine phase difference ϕ by the predetermined phase difference. As a result, the frequency fb of the current IB flowing to the direct-current power supply 30 is increased so that the amplitude of the current IB flowing to the direct-current power supply 30 becomes smaller. Here, instead of whether the above-described condition is met being determined, the control apparatus 33 may determine whether the effective value of the current IB flowing to the direct-current power supply 30 is smaller than a predetermined effective current value.

According to the present embodiment, when the amplitude of the current IB flowing to the direct-current power supply 30 is determined to exceed the current threshold, the overlap period between the output periods of the active voltage vectors V1 to V6 to the first rotating electric machine 21a and the output periods of the reactive voltage vectors V0 and V7 to the second rotating electric machine 21b is lengthened. As a result, the frequency fb of the current IB flowing to the direct-current power supply 30 is increased so that the amplitude of the current IB flowing to the direct-current power supply 30 becomes smaller. As a result, the occurrence of a situation in which a current larger than the rated current flows to the direct-current power supply 30 can be accurately suppressed.

In the frequency change process, the process in which the frequency fb of the current IB flowing to the direct-current power supply 30 is increased is not limited to lengthening of the overlap period, described above. In the frequency change process, the frequency fb of the current IB flowing to the direct-current power supply 30 may be increased by the reactive voltage vector to the rotating electric machines 21a and 21b being inserted between two differing active voltage vectors.

Here, a case in which the third adjustment period is performed after the first adjustment period at step S18 will be described. In this case, for example, the voltage vectors to the rotating electric machines 21a and 21b change from states shown in Figs. 37(a) and 37(b) before the frequency change process is performed to states shown in Figs. 37(c) and 37(d). Specifically, when the seventh reactive voltage vector V7 is inserted, the voltage vectors to the first rotating electric machine 21a are outputted in the order of V7→V2→V7→V1→V7→V6→V0→V6→V7→V1→V7→ V2 and the voltage vectors to the second rotating electric machine 21b are outputted in the order of V2→V7→V2→V7→V1→V7→V6→V0. Here, the output period of the inserted seventh reactive voltage vector V7 may be set to be longer than the time required for each of the upper arm switches QUH to QWH to be turned on and each of the lower arm switches QUL to QWL to be turned off.

As a result of the seventh reactive voltage vector V7 being inserted into the voltage vectors to the rotating electric machines 21a and 21b, the number of oscillations in the total current of the first inverter current Idea and the second inverter current Idcb within one switching cycle Tsw increases. Therefore, the frequency of the total current of the first inverter current Idea and the second inverter current Idcb is increased. In accompaniment, the frequency fb of the current IB flowing to the direct-current power supply 30 can be increased so as to be shifted away from the resonance frequency fr.

Here, in the frequency change process, the control apparatus 33 is not limited to inserting the reactive voltage vector between all of the two differing active voltage vectors within one switching cycle Tsw. For example, the control apparatus 33 may insert the reactive voltage vector in one section between two differing active voltage vectors within one switching cycle Tsw. In this case, the voltage vectors to the first rotating electric machine 21a may be outputted in the order of V7→V2→V7→V1→V6→V0→V6→V1→V2, and the voltage vectors to the second rotating electric machine 21b may be outputted in the order of V2→V7→V2→V7→V1→V6→V0. Here, the frequency fb of the current IB flowing to the direct-current power supply 30 is set higher in cases in which the reactive voltage vector is inserted in many sections than in cases in which the reactive voltage vector is inserted in few sections.

In the frequency change process, the control apparatus 33 may insert the zeroth reactive voltage vector V0 instead of the seventh reactive voltage vector V7 in the voltage vectors to the first rotating electric machine 21a. In this case, for example, the control apparatus 33 may output the voltage vectors to the first rotating electric machine 21a in the order of V7→V2→V0→V1→V0→V6→ V0→V6→V0→V1→V0→V2, and the voltage vectors to the second rotating electric machine 21b in the order of V2→V7→V2→V0→V1→V0→V6→V0. Here, the output period of the inserted zeroth reactive voltage vector V0 may be set to be longer than the time required for each of the upper arm switches QUH to QWH to be turned off and each of the lower arm switches QUL to QWL to be turned on.

In the frequency change process, the control apparatus 33 may insert the reactive voltage vector in the voltage vectors to the rotating electric machines 21a and 21b while maintaining the output period adjusted by the first adjustment process and suitable for reducing the ripple current in the smoothing capacitor 23. For example, as shown in Figs. 37(c) and 37(d), a total period of the output periods of the first, second, and sixth voltage vectors V1, V2, and V6 to the first rotating electric machine 21a and the output period of the inserted reactive voltage vector may be set to be equal to the output period of the seventh reactive voltage vector to the second rotating electric machine 21b. As a result, the frequency fb of the current IB flowing to the direct-current power supply 30 can be increased while the ripple current of the smoothing capacitor 23 is reduced.

The control apparatus 33 may insert the reactive voltage vectors V0 and V7 in the voltage vectors to either of the rotating electric machines 21a and 21b.

In Fig. 33 above, the processes at steps S15, S18, S19, and S21 may not be performed. That is, the first adjustment process and the second adjustment process may not be performed, and only the third adjustment process may be performed.

### <Seventh embodiment>

A seventh embodiment will be described below with reference to the drawings, mainly focusing on the differences from the sixth embodiment. According to the present embodiment, the embodiment of the third adjustment process is modified. The frequency fb of the current IB flowing to the direct-current power supply 30 is changed to be higher or lower depending on the frequency fb.

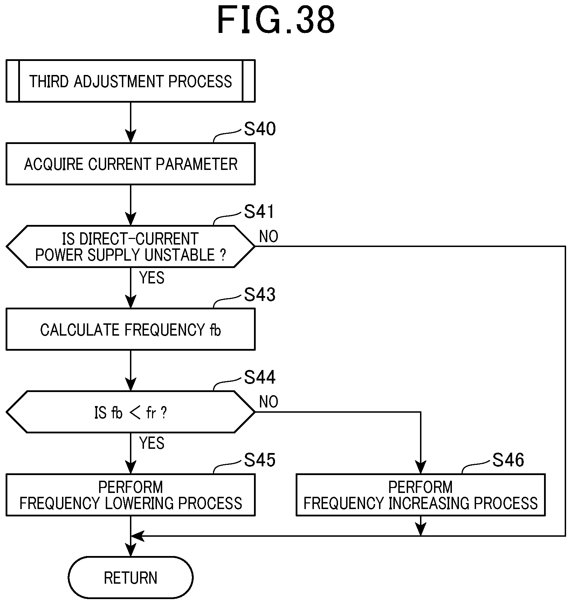

Fig. 38 shows the processing steps in the third adjustment process at step S30 in Fig. 33 above. Here, in Fig. 38, configurations that are identical to the configurations shown in Fig. 34 above are given the same reference numbers for convenience.

When an affirmative determination is made at step S41, the process proceeds to step S43. At step S43, the frequency fb of the current IB flowing to the direct-current power supply 30 is calculated. The frequency fb of the current IB flowing to the direct-current power supply 30 may be calculated based on at least one of the detection value of the phase current sensor 34, the detection value of the voltage sensor 35, the detection value of the power supply current sensor 37, and the voltage vectors V0 to V7 to the rotating electric machines 21a and 21b.

At step S44, whether the frequency fb of the current IB flowing to the direct-current power supply 30 is lower than the resonance frequency fr is determined. When an affirmative determination is made at step S44, the process proceeds to step S45. Meanwhile, when a negative determination is made at step S44, the process proceeds to step S46. Here, at step S44, instead of whether the frequency fb of the current IB flowing to the direct-current power supply 30 is lower than the resonance frequency fr being determined, whether the frequency fb of the current IB flowing to the direct-current power supply 30 is equal to or lower than the resonance frequency fr may be determined.

At step S45, a frequency lowering process in which the frequency fb of the current IB flowing to the direct-current power supply 30 is lowered is performed. Specifically, the frequency lowering process is a process in which the overlap period in which the output periods of the active voltage vectors V1 to V6 to the first rotating electric machine 21a and the output periods of the reactive voltage vector V0 and V7 to the second rotating electric machine 21b overlap is shortened.

At step S46, a frequency increasing process in which the frequency fb of the current IB flowing to the direct-current power supply 30 is increased is performed. Specifically, the frequency increasing process is at least either of a process in which the overlap period in which the output periods of the active voltage vectors V1 to V6 to the first rotating electric machine 21a and the output periods of the reactive voltage vector V0 and V7 to the second rotating electric machine 21b overlap is lengthened or a process in which the reactive voltage vector to the rotating electric machines 21a and 21b is inserted between two differing effective vectors.

Based on the propagation characteristics shown in Fig. 32, the amplification factor reaches a peak value at the resonance frequency fr. Therefore, to accurately reduce the current IB flowing to the direct-current power supply 30, it is desirable for the frequency fb to be changed taking into consideration the relationship between the frequency fb of the current IB flowing to the direct-current power supply 30 and the resonance frequency fr.

According to the present embodiment, the frequency lowering process is performed when the frequency fb of the current IB flowing to the direct-current power supply 30 is lower than the resonance frequency fr. Meanwhile, the frequency increasing process is performed when the frequency fb of the current IB flowing to the direct-current power supply 30 is equal to or higher than the resonance frequency fr. As a result, the frequency fb of the current IB flowing to the direct-current power supply 30 is changed in the direction in which the amplification factor decreases. Consequently, the current IB flowing to the direct-current power supply 30 can be accurately reduced.

### <Other embodiments>

Here, the above-described embodiments may be modified in the following manner.

In the process at step S15, instead of whether [m1-(1-m2)]=0 is established being determined, whether |m1-(1-m2)|<εa is established may be determined. Here, εa is a first tolerance value and a tolerance value of a discordance period between the output periods of the active voltage vectors V1 to V6 to the first rotating electric machine 21 and the output periods of the reactive voltage vectors V0 and V7 to the second rotating electric machine 21b. For example, when the relationship |m1-(1-m2)|<εa is established, the first tolerance value εa may be set such that the discordance period is shorter than the voltage vector of which the output period is the shortest among the voltage vectors V0 to V7 outputted in one switching cycle Tsw. Specifically, in Fig. 26, the first tolerance value εa may be set such that the discordance period is shorter than the first active voltage vector V1 outputted to the first rotating electric machine 21a.

In the process at step S19, instead of whether (m1-m2)=0 is established being determined, whether |m1-m2|<εb is established may be determined. Here, εb is a second tolerance value and is a tolerance value of a discordance period between the output periods of the active voltage vectors V1 to V6 to the first rotating electric machine 21 and the output periods of the active voltage vectors V1 to V6 to the second rotating electric machine 21b. For example, when the relationship |m1-m2|<εb is established, the second tolerance value εb may be set such that the discordance period is shorter than the voltage vector of which the output period is the shortest among the voltage vectors V0 to V7 outputted in one switching cycle Tsw.

In the process at step S18, instead of the first adjustment process being performed, for example, a process may be performed in which the output periods of the active voltage vectors V1 to V6 of either of the rotating electric machines 21a and 21b and the output periods of the reactive voltage vectors V0 and V7 to the other are brought closer together so that the above-described relationship |m1-(1-m2)|<εa is established. In this case as well, the ripple current flowing to the smoothing capacitor 23 can be reduced.

In the process at step S21, instead of the second adjustment process being performed, a process may be performed in which the output periods of the active voltage vectors V1 to V6 are brought closer together and the output periods of the reactive voltage vectors V0 and V7 are brought closer together so that the above-described relationship |m1-m2|<εb is established. In this case as well, the ripple current flowing to the smoothing capacitor 23 can be reduced.

The semiconductor switch configuring the inverter is not limited to the N-channel MOSFET, and may be, for example, an insulated-gate bipolar transistor (IGBT). In this case, the high-potential-side terminal of the switch is a collector, and the low-potential-side terminal is an emitter. In addition, a freewheeling diode may be connected in antiparallel to each switch.

The control unit and the method thereof described in the present disclosure may be actualized by a dedicated computer that is provided such as to be configured by a processor and a memory, the processor being programmed to provide one or a plurality of functions that are realized by a computer program. Alternatively, the control unit and the method thereof described in the present disclosure may be actualized by a dedicated computer that is provided by a processor being configured by a single dedicated hardware logic circuit or more. Still alternatively, the control unit and the method thereof described in the present disclosure may be actualized by a single dedicated computer or more. The dedicated computer may be configured by a combination of a processor that is programmed to provide one or a plurality of functions, a memory, and a processor that is configured by a single hardware logic circuit or more. In addition, the computer program may be stored in a non-transitory computer-readable (tangible) storage medium that can be read by a computer as instructions performed by the computer.

Exemplary configurations extracted from the embodiments described above are described below.

### [Configuration 1]

A control apparatus of a rotating electric machine applicable to a control system, the control system including: a plurality of power conversion circuits (22a, 22b) that convert direct-current power from a direct-current power supply (30) to alternating-current power and output the alternating-current power by switching operations; rotating electric machines (21a, 21b) that are provided in correspondence to the power conversion circuits and supplied with the alternating-current power outputted from the power conversion circuits; and a capacitor (23) that is connected in parallel to the direct-current power supply, provided on an input side of the power conversion circuits, and common to the power conversion circuits, the control apparatus including: an adjusting unit that performs an adjustment process in which output modes of voltage vectors to the rotating electric machines are adjusted; and an operating unit that performs the switching operations of the power conversion circuits to output the voltage vectors adjusted by the adjusting unit.

### [Configuration 2]

The control apparatus of a rotating electric machine described in configuration 1, wherein the adjusting unit performs, as the adjustment process, a process in which an output period of an active voltage vector to each rotating electric machine is adjusted based on a drive state of each rotating electric machine; and the operating unit performs the switching operations to alternately output the active voltage vector and a reactive voltage vector to each rotating electric machine while setting the output period of the active voltage vector to the rotating electric machine to the output period adjusted by the adjusting unit.

### [Configuration 3]

The control apparatus of a rotating electric machine described in configuration 2, further including: a drive determining unit that determines whether each rotating electric machine is in a power running drive state in which the rotating electric machine functions as a motor or a regenerative drive state in which the rotating electric machine functions as a power generator, as the drive state, wherein under a condition that the drive determining unit determines that all rotating electric machines are in the power running drive state or the regenerative drive state, the adjusting unit performs, as the adjustment process, a process in which the output period of the reactive voltage vector to a reference rotating electric machine that is any one of the rotating electric machines and the output period of the active voltage vector to the remaining rotating electric machine are brought closer together while the output periods of the active voltage vectors to the rotating electric machines are shifted from each other so that the output period of the active voltage vector to the remaining rotating electric machine is included within the output period of the reactive voltage vector to the reference rotating electric machine.

### [Configuration 4]

The control apparatus of a rotating electric described in configuration 3, further including: a period determining unit that determines whether the output period of the reactive voltage vector to the reference rotating electric machine and the output period of the active voltage vector to the remaining rotating electric machine are periods of differing lengths in one switching cycle of the switching operation, wherein the adjusting unit performs the adjustment process under a condition that the period determining unit determines that the output period of the reactive voltage vector to the reference rotating electric machine and the output period of the active voltage vector to the remaining rotating electric machine are periods of differing lengths.

### [Configuration 5]

The control apparatus of a rotating electric machine described in configuration 2, wherein the plurality of power conversion circuits comprise a first power conversion circuit (22a) and a second power conversion circuit (22b); a first rotating electric machine (21a) is provided in correspondence to the first power conversion circuit and a second rotating electric machine (21b) is provided in correspondence to the second power conversion circuit as the rotating electric machine; the control apparatus includes a drive determining unit that determines whether the first rotating electric machine and the second rotating electric machine are in a power running drive state in which the rotating electric machine functions as a motor or a regenerative drive state in which the rotating electric machine functions as a power generator, as the drive state; and under a condition that the drive determining unit determines that the first rotating electric machine is in the power running drive state and the second rotating electric machine is in the regenerative drive state, the adjusting unit performs, as the adjustment process, a process in which the output period of the active voltage vector to the first rotating electric machine and the output period of the active voltage vector to the second rotating electric machine are brought closer together.

### [Configuration 6]

The control apparatus of a rotating electric machine described in configuration 5, further including: a period determining unit that determines whether the output period of the active voltage vector to the first rotating electric machine and the output period of the active voltage vector to the second rotating electric machine are periods of differing lengths in one switching cycle of the switching operation, wherein the adjusting unit performs the adjustment process under a condition that the period determining unit determines that the output period of the active voltage vector to the first rotating electric machine and the output period of the active voltage vector to the second rotating electric machine are periods of differing lengths.

### [Configuration 7]

The control apparatus of a rotating electric machine described in any one of configurations 2 to 6, wherein the adjusting unit includes: a first selecting unit that selects two types of active voltage vectors that sandwich a command voltage vector to the rotating electric machine and have a phase difference of 60 degrees therebetween, for each rotating electric machine; and a second selecting unit that, of two types of active voltage vectors that sandwich the command voltage vector to the rotating electric machine and have a phase difference of 120 degrees therebetween, selects an active voltage vector differing from the active voltage vectors selected by the first selecting unit, for each rotating electric machine, and in the adjustment process, the adjusting unit adjusts the output period of the active voltage vector to each rotating electric machine using the three types of active voltage vectors selected by each of the first selecting unit and the second selecting unit.

### [Configuration 8]

The control apparatus of a rotating electric machine described in configuration 7, wherein the adjusting unit brings magnitudes of currents flowing to the power conversion circuits closer together in the adjustment process.

### [Configuration 9]

The control apparatus of a rotating electric machine described in any one of configurations 2 to 6, wherein the adjusting unit includes: a first selecting unit that selects two types of active voltage vectors that sandwich a command voltage vector to a specific rotating electric machine that is a part of the rotating electric machines and have a phase difference of 60 degrees therebetween; and a second selecting unit that, of two types of active voltage vectors that sandwich the command voltage vector to the specific rotating electric machine and have a phase difference of 120 degrees therebetween, selects an active voltage vector differing from the active voltage vectors selected by the first selecting unit, and in the adjustment process, the adjustment process adjusts the output period of the active voltage vector to the specific rotating electric machine using the three types of active voltage vectors selected by each of the first selecting unit and the second selecting unit.

### [Configuration 10]

The control apparatus of a rotating electric machine described in any one of configurations 2 to 6, wherein in the adjustment process, the adjusting unit adjusts the output period of the active voltage vector to each rotating electric machine by controlling a field weakening current flowing to the rotating electric machine.

### [Configuration 11]

The control apparatus of a rotating electric machine described in any one of configurations 1 to 10, wherein in the adjustment process, the adjusting unit acquires a current parameter that is a current flowing to the direct-current power supply or a phase function of the current, and includes an alternating-current component, and adjusts the output mode of the voltage vector to each rotating electric machine to change a frequency of the current flowing to the direct-current power supply based on the current parameter.

### [Configuration 12]

The control apparatus of a rotating electric machine described in configuration 11, wherein: the plurality of power conversion circuits comprise a first power conversion circuit (22a) and a second power conversion circuit (22b); a first rotating electric machine (21a) is provided in correspondence to the first power conversion circuit and a second rotating electric machine (21b) is provided in correspondence to the second power conversion circuit as the rotating electric machine; and in the adjustment process, the adjusting unit: determines whether the acquired current parameter exceeds a threshold; and when determined that the current parameter exceeds the threshold, changes the frequency of the current flowing to the direct-current power supply by adjusting an overlap period in which the output period of the active voltage vector to the first rotating electric machine and the output period of the active voltage vector to the second rotating electric machine overlap so that an amplitude of the current parameter decreases.

### [Configuration 13]

The control apparatus of a rotating electric machine described in configuration 11, wherein the adjusting unit, in the adjustment process, determines whether the acquired current parameter exceeds a threshold, and when determined that the current parameter exceeds the threshold, increases the frequency of the current flowing to the direct-current power supply by inserting a reactive voltage vector to the rotating electric machine between two differing active voltage vectors so that an amplitude of the current parameter is decreased.

### [Configuration 14]

The control apparatus of a rotating electric machine described in any one of configurations 1 to 10, wherein: the plurality of power conversion circuits comprise a first power conversion circuit (22a) and a second power conversion circuit (22b); a first rotating electric machine (21a) is provided in correspondence to the first power conversion circuit and a second rotating electric machine (21b) is provided in correspondence to the second power conversion circuit as the rotating electric machine; and in the adjustment process, the adjusting unit: acquires a current parameter that is a current flowing to the direct-current power supply or a phase function of the current and that includes an alternating-current component; determines whether the acquired current parameter exceeds a threshold, when determined that the current parameter exceeds the threshold; determines whether the frequency of the current flowing to the direct-current power supply is higher or lower than a resonance frequency that is prescribed by an inductance in wiring connecting the direct-current power supply and the capacitor and a capacitance of the capacitor; when determined that the frequency of the current flowing to the direct-current power supply is lower than the resonance frequency, decreases the frequency of the current flowing to the direct-current power supply so that an amplitude of the current parameter is decreased; and when determined that the frequency of the current flowing to the direct-current power supply is higher than the resonance frequency, increases the frequency of the current flowing to the direct-current power supply so that the amplitude of the current parameter is decreased.

### [Configuration 15]

The control apparatus of a rotating electric machine described in any one of configurations 1 to 14, wherein: the control system is applied to a vehicle (10) that travels by drive wheels (11a, 11b) being rotatably driven; the rotating electric machines are individually provided in correspondence to the drive wheels; and as steering angles of left and right steered wheels (11a, 11b) of the vehicle among the drive wheels become larger, a torque difference and a rotation speed difference between the rotating electric machines provided in correspondence to the steering wheels increase.

While the present disclosure has been described with reference to embodiments thereof, it is to be understood that the disclosure is not limited to the embodiments and constructions. The present disclosure is intended to cover various modification examples and modifications within the range of equivalency. In addition, various combinations and configurations, and further, other combinations and configurations including more, less, or only a single element thereof are also within the spirit and scope of the present disclosure.

## Claims

1. A control apparatus of a rotating electric machine that is applicable to a control system, the control system including: a plurality of power conversion circuits (22a, 22b) that convert, by switching operations, direct-current power from a direct-current power supply (30) to alternating-current power and output the alternating-current power; rotating electric machines (21a, 21b) that are provided in correspondence to the power conversion circuits and supplied with the alternating-current power outputted from the power conversion circuits; and a capacitor (23) that is connected in parallel to the direct-current power supply, provided on an input side of the power conversion circuits, and common to the power conversion circuits, the control apparatus comprising:
an adjusting unit that performs an adjustment process in which output modes of voltage vectors to the rotating electric machines are adjusted; and
an operating unit that performs the switching operations of the power conversion circuits to output the voltage vectors adjusted by the adjusting unit.

2. The control apparatus of a rotating electric machine according to claim 1, wherein
the adjusting unit performs, as the adjustment process, a process in which an output period of an active voltage vector to each rotating electric machine is adjusted based on a drive state of each rotating electric machine; and
the operating unit performs the switching operations to alternately output the active voltage vector and a reactive voltage vector to each rotating electric machine while setting the output period of the active voltage vector to the rotating electric machine to the output period adjusted by the adjusting unit.

3. The control apparatus of a rotating electric machine according to claim 2, further comprising:
a drive determining unit that determines whether each rotating electric machine is in a power running drive state in which the rotating electric machine functions as a motor or a regenerative drive state in which the rotating electric machine functions as a power generator, as the drive state, wherein
under a condition that the drive determining unit determines that all rotating electric machines are in the power running drive state or the regenerative drive state, the adjusting unit performs, as the adjustment process, a process in which the output period of the reactive voltage vector to a reference rotating electric machine that is any one of the rotating electric machines and the output period of the active voltage vector to the remaining rotating electric machine are brought closer together while the output periods of the active voltage vectors to the rotating electric machines are shifted from each other so that the output period of the active voltage vector to the remaining rotating electric machine is included within the output period of the reactive voltage vector to the reference rotating electric machine.

4. The control apparatus of a rotating electric according to claim 3, further comprising:
a period determining unit that determines whether the output period of the reactive voltage vector to the reference rotating electric machine and the output period of the active voltage vector to the remaining rotating electric machine are periods of differing lengths in one switching cycle of the switching operation, wherein
the adjusting unit performs the adjustment process under a condition that the period determining unit determines that the output period of the reactive voltage vector to the reference rotating electric machine and the output period of the active voltage vector to the remaining rotating electric machine are periods of differing lengths.

5. The control apparatus of a rotating electric machine according to claim 2, wherein:
the plurality of power conversion circuits comprise a first power conversion circuit (22a) and a second power conversion circuit (22b);
a first rotating electric machine (21a) is provided in correspondence to the first power conversion circuit and a second rotating electric machine (21b) is provided in correspondence to the second power conversion circuit as the rotating electric machine;
the control apparatus includes a drive determining unit that determines whether the first rotating electric machine and the second rotating electric machine are in a power running drive state in which the rotating electric machine functions as a motor or a regenerative drive state in which the rotating electric machine functions as a power generator, as the drive state, and
under a condition that the drive determining unit determines that the first rotating electric machine is in the power running drive state and the second rotating electric machine is in the regenerative drive state, the adjusting unit performs, as the adjustment process, a process in which the output period of the active voltage vector to the first rotating electric machine and the output period of the active voltage vector to the second rotating electric machine are brought closer together.

6. The control apparatus of a rotating electric machine according to claim 5, further comprising:
a period determining unit that determines whether the output period of the active voltage vector to the first rotating electric machine and the output period of the active voltage vector to the second rotating electric machine are periods of differing lengths in one switching cycle of the switching operation, wherein
the adjusting unit performs the adjustment process under a condition that the period determining unit determines that the output period of the active voltage vector to the first rotating electric machine and the output period of the active voltage vector to the second rotating electric machine are periods of differing lengths.

7. The control apparatus of a rotating electric machine according to any one of claims 2 to 6, wherein:
the adjusting unit includes
a first selecting unit that selects two types of active voltage vectors that sandwich a command voltage vector to the rotating electric machine and have a phase difference of 60 degrees therebetween, for each rotating electric machine, and
a second selecting unit that, of two types of active voltage vectors that sandwich the command voltage vector to the rotating electric machine and have a phase difference of 120 degrees therebetween, selects an active voltage vector differing from the active voltage vectors selected by the first selecting unit, for each rotating electric machine, and
in the adjustment process, the adjusting unit adjusts the output period of the active voltage vector to each rotating electric machine using the three types of active voltage vectors selected by each of the first selecting unit and the second selecting unit.

8. The control apparatus of a rotating electric machine according to claim 7, wherein:
the adjusting unit brings magnitudes of currents flowing to the power conversion circuits closer together in the adjustment process.

9. The control apparatus of a rotating electric machine according to any one of claims 2 to 6, wherein:
the adjusting unit includes
a first selecting unit that selects two types of active voltage vectors that sandwich a command voltage vector to a specific rotating electric machine that is a part of the rotating electric machines and have a phase difference of 60 degrees therebetween, and
a second selecting unit that, of two types of active voltage vectors that sandwich the command voltage vector to the specific rotating electric machine and have a phase difference of 120 degrees therebetween, selects an active voltage vector differing from the active voltage vectors selected by the first selecting unit, and
in the adjustment process, the adjusting unit adjusts the output period of the active voltage vector to the specific rotating electric machine using the three types of active voltage vectors selected by each of the first selecting unit and the second selecting unit.

10. The control apparatus of a rotating electric machine according to any one of claims 2 to 6, wherein:
the adjusting unit, in the adjustment process, adjusts the output period of the active voltage vector to each rotating electric machine by controlling a field weakening current flowing to the rotating electric machine.

11. The control apparatus of a rotating electric machine according to claim 1, wherein:
in the adjustment process, the adjusting unit
acquires a current parameter that is a current flowing to the direct-current power supply or a phase function of the current, and includes an alternating-current component, and
adjusts the output mode of the voltage vector to each rotating electric machine to change a frequency of the current flowing to the direct-current power supply based on the current parameter.

12. The control apparatus of a rotating electric machine according to claim 11, wherein:
the plurality of power conversion circuits comprise a first power conversion circuit (22a) and a second power conversion circuit (22b);
a first rotating electric machine (21a) is provided in correspondence to the first power conversion circuit and a second rotating electric machine (21b) is provided in correspondence to the second power conversion circuit as the rotating electric machine; and
in the adjustment process, the adjusting unit
determines whether the acquired current parameter exceeds a threshold, and
when determined that the current parameter exceeds the threshold, changes the frequency of the current flowing to the direct-current power supply by adjusting an overlap period in which the output period of the active voltage vector to the first rotating electric machine and the output period of the active voltage vector to the second rotating electric machine overlap so that an amplitude of the current parameter decreases.

13. The control apparatus of a rotating electric machine according to claim 11, wherein:
in the adjustment process, the adjusting unit
determines whether the acquired current parameter exceeds a threshold, and
when determined that the current parameter exceeds the threshold, increases the frequency of the current flowing to the direct-current power supply by inserting a reactive voltage vector to the rotating electric machine between two differing active voltage vectors so that an amplitude of the current parameter is decreased.

14. The control apparatus of a rotating electric machine according to claim 1, wherein:
the plurality of power conversion circuits comprise a first power conversion circuit (22a) and a second power conversion circuit (22b);
a first rotating electric machine (21a) is provided in correspondence to the first power conversion circuit and a second rotating electric machine (21b) is provided in correspondence to the second power conversion circuit as the rotating electric machine; and
in the adjustment process, the adjusting unit
acquires a current parameter that is a current flowing to the direct-current power supply or a phase function of the current, and includes an alternating-current component,
determines whether the acquired current parameter exceeds a threshold,
when determined that the current parameter exceeds the threshold, determines whether the frequency of the current flowing to the direct-current power supply is higher or lower than a resonance frequency that is prescribed by an inductance in wiring connecting the direct-current power supply and the capacitor and a capacitance of the capacitor,
when determined that the frequency of the current flowing to the direct-current power supply is lower than the resonance frequency, decreases the frequency of the current flowing to the direct-current power supply so that an amplitude of the current parameter is decreased, and
when determined that the frequency of the current flowing to the direct-current power supply is higher than the resonance frequency, increases the frequency of the current flowing to the direct-current power supply so that the amplitude of the current parameter is decreased.

15. The control apparatus of a rotating electric machine according to claim 1, wherein:
the control system is applied to a vehicle (10) that travels by drive wheels (11a, 11b) being rotatably driven;
the rotating electric machines are individually provided in correspondence to the drive wheels; and
as steering angles of left and right steered wheels (11a, 11b) of the vehicle among the drive wheels become larger, a torque difference and a rotation speed difference between the rotating electric machines provided in correspondence to the steering wheels increase.

16. A program that is applicable to a control system, the control system including: a plurality of power conversion circuits (22a, 22b) that convert direct-current power from a direct-current power supply (30) to alternating-current power and output the alternating-current power by switching operations; rotating electric machines (21a, 21b) that are provided in correspondence to the power conversion circuits and supplied with the alternating-current power outputted from the power conversion circuits; a capacitor (23) that is connected in parallel to the direct-current power supply, provided on an input side of the power conversion circuits, and common to the power conversion circuits; and a computer (33a), the program causing the computer to implement:
a process in which output modes of a voltage vectors to the rotating electric machines are adjusted; and
a process in which the switching operations of the power conversion circuits are performed to output the adjusted voltage vectors.
